# EUROPÄISCHE PATENTSCHRIFT

(11) **EP 3 937 594 B1**
(45) Veröffentlichungstag und Bekanntmachung des Hinweises auf die Patenterteilung: **12.11.2025**
(21) Anmeldenummer: 21183519.4
(22) Anmeldetag: 02.07.2021
(51) Int. Cl.: H05B 45/20, H05B 47/185, H05B 47/175

(54) **MEHRKANAL-LICHTSTEUERUNG**
MULTI-CHANNEL LIGHT CONTROL
COMMANDE LUMINEUSE À CANAUX MULTIPLES

(30) Priorität: 10.07.2020 LU 101921
(43) Veröffentlichungstag der Anmeldung: 12.01.2022
(73) Patentinhaber: Big Dutchman International GmbH, 49377 Vechta (DE)
(72) Erfinder: Neugebauer, Nils, 26203 Wardenburg (DE)
(74) Vertreter: Eisenführ Speiser

(56) Entgegenhaltungen:
- WO-A2-2008/007268
- DE-A1- 102018 115 672
- US-A1- 2013 241 433

## Beschreibung

Die Erfindung betrifft eine Beleuchtungsvorrichtung, insbesondere zur Beleuchtung einer Tierhaltungsvorrichtung, vorzugsweise für Geflügeltiere wie Legehennen. Des Weiteren betrifft die Erfindung eine Steuerungseinrichtung zur Steuerung einer Beleuchtungsvorrichtung, ein Verfahren zum Steuern einer Beleuchtungsvorrichtung und eine Verwendung einer Beleuchtungsvorrichtung.

Die Beleuchtung einer Tierhaltungsvorrichtung, wie beispielsweise eines Stallgebäudes für Legehennen, erfolgt typischerweise mittels Beleuchtungsvorrichtungen mit einer Vielzahl von Lichtquellen, wobei heutzutage als Leuchtmittel häufig Leuchtdioden (LED) verwendet werden, um den Stromverbrauch der Beleuchtungsvorrichtung gering zu halten.

Grundsätzlich ist es dabei möglich, mehrere Leuchtdioden, die Licht mit voneinander abweichenden Wellenlängen und somit voneinander abweichenden Farben emittieren, einzusetzen. Mittels solcher unterschiedlich farbiger Lichtquellen können durch Mischung der Farben dann unterschiedliche Lichtstimmungen erzeugt werden, was sich positiv auf erwünschte und unerwünschte Verhaltensweisen der Tiere als auch auf das allgemeine Tierwohl auswirken kann. Dabei können beispielsweise rote und weiße oder mehrere verschiedenfarbige Lichtquellen als Bestandteil einer Beleuchtungsvorrichtung oder mehrerer Beleuchtungsvorrichtungen in einem Stall verwendet werden. Um mit den unterschiedlich farbigen Lichtquellen jeweils das gewünschte Licht erzeugen zu können, ist eine entsprechende Ansteuerung dieser Lichtquellen notwendig.

EP1555859B1 beschreibt ein Verfahren zur Steuerung von Leuchtmittelbetriebsgeräten. Dabei werden auf eine Versorgungsspannung hochfrequente digitale Steuersignale aufmoduliert, die von Demodulatoren in den Leuchtmittelbetriebsgeräten demoduliert werden, um dann eine Ansteuerung von zugeordneten Leuchtmitteln vorzunehmen. Ein Nachteil eines solchen Verfahrens besteht darin, dass solche Demodulatoren einen hohen Raumbedarf aufweisen. Ein weiterer Nachteil besteht darin, dass die Demodulatoren hohe Kosten verursachen. Insbesondere für Beleuchtungsvorrichtungen mit einer Vielzahl an Lichtquellen, für die eine Vielzahl an Demodulatoren notwendig sind, wie dies in Anwendungen in großen Stallgebäuden erforderlich ist, eignet sich diese Technologie daher nicht.

EP2036406B1 beschreibt ein Beleuchtungssystem, wobei ein Controller mehrere Schaltfrequenzsignale im Bereich von 57 kHz bis 127 kHz erzeugt, die von Bandpassfiltern mit Bandpasscharakteristik empfangen werden. Die Bandpassfilter geben dann jeweils ein Ausgangssignal an einen Lampentreiber aus und in Reaktion auf dieses Ausgangssignal wird von dem jeweiligen Lampentreiber ein Betriebszustand eingestellt. Ein Nachteil eines solchen Systems besteht darin, dass bei nicht abgeschirmten Leitungen durch die hochfrequenten Schaltfrequenzsignale unerwünschte Abstrahlungen von elektromagnetischen Wellen auftreten können. Ein weiterer Nachteil besteht darin, dass derartige Schaltfrequenzsignale mit zunehmender Leitungslänge verschmieren und dann mit den beschriebenen Bandpassfiltern nicht mehr filterbar sind. Für Beleuchtungsvorrichtungen in großen Stallgebäuden mit den damit verbundenen großen Leitungslängen eignet sich diese Technologie daher nicht.

WO2015105776A1 beschreibt eine Beleuchtungsanordnung mit Leuchtdioden, die ein elektrisches Anregungssignal empfängt, das von einer Dimmvorrichtung variiert wird. Eine Ansteuerschaltung hat einen ersten und einen zweiten Pfad, die jeweils eine Vielzahl von Leuchtdioden aufweisen. Jede Vielzahl von Leuchtdioden hat dabei eine Schwellenspannung. Wird die Schwellenspannung überschritten, so emittieren die jeweiligen Leuchtdioden Licht. Ein Nachteil einer solchen Beleuchtungsanordnung besteht darin, dass ein Spannungsabfall durch die jeweiligen Leuchtdioden stattfindet. Durch den gesamten Spannungsabfall kann der Schwellwert bei einigen Leuchtdioden unterschritten werden, obwohl die ausgegebene Spannung über dem Schwellwert liegt.

US2013/241433A1 und WO2008/007268A2 beschreiben Beleuchtungseinrichtungen, bei denen ein Steuerungssignal auf eine Versorgungsleitung aufmoduliert wird und dieses Steuerungssignal in der Leuchte decodiert wird, um daraus eine Lichtfarbe zu ermitteln und dann einzustellen. Nachteilig an diesem Stand der technik ist jedoch, dass jede Eigenschaft des zu erzeugenden Lichtes, also beispielsweise Lichtfarbe und Lichtintensität, codiert und decodiert werden muss, wodurch eine programmierte Logik in der Steuerungseinheit und in jeder Leuchte implementiert werden muss, was die Investitionskosten und den technischen Aufwand erhöht. Diese Beleuchtungseinrichtungen eignen sich daher nicht gut für robuste Anwendungen mit einer Vielzahl von Leuchten zum Ausleuchten großer Innenräume.

Aus DE10 2018 115 672A1 ist ein ein Betriebsgerat zum Betreiben mehrerer Leuchtrnittel an einem zweipoligen Ausgangsanschluss vorbekannt. Das Betriebsgerat weist einen mit dem zweipoligen Ausgangsanschluss verbundenen Schaltregler zum Bereitstellen einer Spannung und eines Stroms für den Betrieb der Leuchtrnittel und eine Steuereinrichtung zum Steuem einer Lichtmischung des von den Leuchtrnitteln abgegebenen Lichts auf, wobei die Steuereinrichtung unterschiedlichen Lichtrnischungen entsprechend unterschiedliche Spannungen und/oder Strome zuordnet und den Schaltregler so steuert, dass dieser eine Spannung bzw. einen Strom an dem zweipoligen Ausgangsanschluss bereitstellt, der einer einzustellenden Lichtrnischung zugeordnet ist. Bei dieser vorbekannten Steuerungsweise wird durch Codierung mit einer Pulsweitenmodulation oder der Ein-und Ausschaltzeitdauer der Versorgungsspannung eine Codierung von Beleuchtungsinformationen erfolgen, die anhand einer Zuordnungsvorschrift decodiert wird und daher zur Steuerung einer gewünschte Beleuchtungssituation verwendet werden kann. Auch bei dieser Ausgestaltung ist jedoch eine programmierte Logik oder Hoch- Band- und Tiefpassfilter in jeder Leuchte zum Zwecke des Abgleichs mit der Zuordnungsvorschrift erforderlich, was die Investitionskosten und den technischen Aufwand erhöht.

Ein grundsätzliches Problem, das bei bekannten Beleuchtungsvorrichtungen auftritt, liegt darin begründet, dass solche Beleuchtungsvorrichtungen einen hohen Materialaufwand und somit hohe Materialkosten erfordern. So sind einerseits zusätzliche Kosten für die logischen Steuerungselemente notwendig. Zum anderen fallen Kosten für die Verbindungsleitungen an. Ein weiteres Problem liegt darin begründet, dass die Beleuchtungsvorrichtungen eine erhebliche Komplexität aufweisen, wodurch für die Installation bekannter Beleuchtungsvorrichtungen ein hoher Zeitaufwand notwendig ist. Diese Kosten und der damit zusammenhängende Installationsaufwand sind insbesondere in Stallgebäuden mit langen Leitungswegen und einer großen benötigten Lichtmenge besonders nachteilig.

Der Erfindung liegt daher die Aufgabe zugrunde, eine verbesserte Lösung bereitzustellen, welche wenigstens eines der genannten Probleme adressiert. Insbesondere ist es Aufgabe der Erfindung, eine Lösung bereitzustellen, die die Materialkosten für eine Beleuchtungsvorrichtung und die Installationskosten für die Einrichtung einer Beleuchtungsvorrichtung verringert.

Gemäß einem ersten Aspekt wird die eingangs genannte Aufgabe gelöst durch eine Beleuchtungsvorrichtung nach Anspruch 1.

Eine Tierhaltungsvorrichtung für Legehennen umfasst vorzugsweise einen Stall und mindestens eine Voliere, insbesondere eine Legehennenvoliere.

Der erfindungsgemäßen Beleuchtungsvorrichtung liegt ein für solche Tierhaltungsvorrichtungen besonders angepasstes Lichtsteuerungsprinzip zu Grunde. Hierzu wird der Leuchte ein Energieversorgungssignal zugleitet, dass eine Farbinformation in Gestalt einer Frequenz aufweist. Das Energieversorgungssignal wird von dem Logikmodul empfangen und die Frequenz durch das Logikmodul ausgelesen, um die darin codierte Kanalinformationen, die vorzugsweise Farbinformation umfassen, zu erhalten. In Abhängigkeit von diesen ausgelesenen Kanalinformationen steuert das Logikmodul nun dem entsprechenden Kanal zugeordnete Lichtquellen der Leuchte an. Die Kanalinformation kann daher so verstanden werden, dass hierin eine Farbinformation liegt. Durch eine Codierung als Kanalinformation ist es jedoch über die direkte Farbzuordnung einer Codierung hinaus möglich, in einem Beleuchtungssystem mehrere Leuchten einzusetzen, die sich voneinander darin unterscheiden, dass Lichtquellen mit unterschiedlicher Farbe einem Kanal zugeordnet sind. So kann beispielsweise bei der ersten Leuchte oder Gruppe von Leuchten dem Kanal A weiß zugeordnet sein, wohingegen bei einer zweiten Leuchte oder Gruppe von Leuchten dem Kanal A rot zugeordnet ist. Wird über das an beide Leuchten oder Leuchtengruppen gemeinsam gesendete Energieversorgungssignal nun Kanal "A" codiert gesendet, so erzeugen die ersten Leuchten weißes Licht und die zweiten Leuchten rotes Licht.

In einer einfachen Ausgestaltung kann dabei wahlweise eine von zwei unterschiedlichen Lichtquellen oder beide Lichtquellen mit dem Energieversorgungssignal beaufschlagt werden, sodass sich insgesamt drei Farben (10, 01, 11) in einer Lichtquellenanordnung steuern lassen. Dies kann ebenso mit einer Lichtquellenanordnung mit drei unterschiedlich farbigen Lichtquellen erfolgen, in diesem Fall ergeben sich sieben steuerbare Farben: (001, 010, 011, 100, 101, 110, 111). Neben dieser binären Ansteuerung (An/Aus) der einzelnen Lichtquellen kann bei fortgeschrittenen Ausgestaltungen der Erfindung auch eine Ansteuerung der Lichtquellen mit einer steuerbaren Beleuchtungsstärke erfolgen. In einer einfachen Ausgestaltung wird den ersten, zweiten und gegebenenfalls weiteren Lichtquellen dabei ein einheitliches Energieversorgungssignal zugewiesen, sodass das resultierende Licht und/oder die Lichtfarbe des von den Lichtquellen emittierten Lichts von der Zusammenstellung der Lichtquellenanordnung bestimmt wird.

Eine Frequenz mit einem in der Frequenz codierten Kanal enthält vorzugsweise Kanalinformationen über einen Kanal oder mehrere Kanäle. Unter einem Kanal ist ein Kanal zur Ansteuerung der ersten, zweiten und gegebenenfalls weiteren Lichtquellen zu verstehen. Beispielsweise kann bei einem ersten Kanal die erste Lichtquelle angesteuert und freigegeben werden, sodass die erste Lichtquelle Licht emittiert und die zweite Lichtquelle blockiert werden, sodass die zweite Lichtquelle kein Licht emittiert. Ferner kann beispielsweise bei einem zweiten Kanal die erste Lichtquelle blockiert werden, sodass die erste Lichtquelle kein Licht emittiert und die zweite Lichtquelle angesteuert und freigegeben werden, sodass die zweite Lichtquelle Licht emittiert. Und weiter können beispielsweise bei einem dritten Kanal die erste und die zweite Lichtquelle so angesteuert und freigegeben werden, dass die erste Lichtquelle und die zweie Lichtquelle Licht emittieren. Dabei kann es eine Vielzahl von Kanälen geben, wobei die Kanäle verschiedene Steuerungsmöglichkeiten zum Ansteuern der Lichtquellen aufweisen können. Damit sind insbesondere verschiedenen Lichtquellen unterschiedlich kombiniert ansteuerbar.

Das Energieversorgungssignal kann an die LEDs selektiv und direkt durchgeleitet werden, in diesem Fall weist die elektrische Versorgung aus dem Logikmodul an die Lichtquelle die gleiche Frequenz und gegebenenfalls eine gleiche Tastrate auf wie das Energieversorgungssignal und das Logikmodul steuert lediglich, welche Lichtquellen mit der elektrischen Energie versorgt werden und welche nicht. Dies ermöglicht beispielsweise eine Farbsteuerung mit drei bzw. sieben steuerbaren Farben bei zwei bzw. drei Lichtquellen pro Lichtquellenanordnung und - durch Veränderung der Tastrate - auch eine Steuerung der Beleuchtungsstärke dieser definierten Farben. Das Logikmodul kann auch so ausgebildet sein, dass es die Frequenz des Energieversorgungssignals ausliest und anhand eines Vergleichs mit vorgespeicherten Daten - beispielsweise in einem gespeicherten Look-Up-Table oder anhand eines definierten Zuordnungs-Algorithmus - aus dieser Frequenz einen Kanal und/oder eine Farbe bestimmt. Anhand des so bestimmten Kanals und/oder der so bestimmten Farbe werden dann die einzelnen Lichtquellen mit einer jeweils individuell durch das Logikmodul gesteuerten Tastrate angesteuert, wobei die Frequenz des Energieversorgungssignals für die elektrische Versorgung der Lichtquellen beibehalten werden kann. Durch diese Decodierung eines Kanals und/oder einer Farbe aus der Frequenz und individuelle Steuerung der Lichtstärke jeder einzelnen Lichtquelle einer Lichtquellenanordnung wird dann eine Lichtquellensteuerung und/oder eine Farbsteuerung über das gesamte Farbspektrum ermöglicht.

Die erste, zweite und gegebenenfalls. weiteren Lichtquellen sind vorzugsweise als Leuchtdioden ausgebildet. Es ist bevorzugt, wenn die Lichtquellen Licht mit unterschiedlichen Wellenlängen und/oder unterschiedlichen Farben emittieren. Beispielsweise können drei verschiedene Leuchtdioden mit den Farben rot, grün und blau verwendet werden, wobei mittels verschiedener Kombinationen der verschiedenen Leuchtdioden unterschiedliche Farben erzeugt werden können. Die in einer Lichtquellenanordnung zusammengefassten Lichtquellen erzeugen dadurch durch Farbmischung eine gewünschte Farbe und Leuchtstärke. In einer Leuchte können auch mehrere Lichtquellenanordnungen angeordnet sein, die durch ein gemeinsames Logikmodul angesteuert werden, um hierdurch die Beleuchtungsstärke der Leuchte und die Lichtverteilung zu verbessern. Die Lichtquellenanordnungen können dabei einheitlich über gleiche Kanäle angesteuert werden, sodass sie Licht gleicher Farbe und Wellenlänge ausstrahlen. Die Lichtquellen der mehreren Lichtquellenanordnungen einer Leuchte können aber auch über unterschiedliche Kanäle oder in vertauschter Weise über die Kanäle angesteuert werden, um so innerhalb einer Leuchte mit einem einzigen Ansteuerungssignal unterschiedliche Lichtfarben / -wellenlängen zu erzeugen. Eine Leuchte kann auch mehrere Logikmodule umfassen, die jeweils eine oder mehrere Lichtquellenanordnungen ansteuern, um so aus einer Leuchte unterschiedliche Lichtfarben - oder -wellenlängen zu erhalten.

Das Auslesen der Frequenz des elektrischen Energieversorgungssignals erfolgt vorzugsweise mittels eines Bausteins zur Frequenzauswertung, wobei dieser Baustein ein programmierbarer oder nicht programmierbarer Mikrocontroller, insbesondere ein analoger Hoch- oder Tiefpass, sein kann. Das Logikmodul umfasst vorzugsweise einen solchen Baustein zur Frequenzauswertung. Es ist bevorzugt, wenn das Logikmodul unmittelbar neben den Lichtquellen angeordnet ist, die von dem Logikmodul gesteuert werden. Die in dem Logikmodul hinterlegten Daten umfassen vorzugsweise Informationen zu Frequenzen oder Frequenzbereichen und diesen Frequenzen oder Frequenzbereichen zugeordnete Schaltbefehle, um mit dem Logikmodul die Lichtquellen zu steuern.

Ein erster Vorteil einer solchen Beleuchtungsvorrichtung liegt darin, dass mit dem Energieversorgungssignal, das zur Versorgung der Lichtquellen bereitgestellt wird, ein elektrische Energieversorgung bereitgestellt wird, die mittels der Frequenz des Energieversorgungssignals Informationen zur Lichtquellenansteuerung an das Logikmodul sendet, wodurch die Lichtquellen wie gewünscht geschaltet werden können. Somit erfolgt die Energieversorgung und die Datenversorgung in einem elektrischen Energieversorgungssignal, ohne dass eine von der Energieversorgung getrennt laufende Datenübermittlung zur Übermittlung von Steuerungsinformationen und/oder Steuerungsbefehlen notwendig ist. Dadurch wird eine kostengünstige Steuerung einer Beleuchtungsvorrichtung ermöglicht, wobei zur Versorgung mit Energie und Informationen lediglich eine 2-Draht-Leitung notwendig ist. Der Materialbedarf für die Versorgungsleitung und der Installationsaufwand und somit die Material- und Installationskosten werden daher erheblich verringert.

Ein weiterer Vorteil liegt darin, dass die Logikmodule eine nur geringe Steuerungsintelligenz aufweisen müssen und daher kleine und kostengünstige Bauteile sind. Dadurch können die Leuchten klein und kostengünstig dimensioniert werden.

Es kann daher eine vorteilhafte Beleuchtungsinstallation geschaffen werden, in der mehrere Leuchten, die jeweils ein Logikmodul und mehrere Lichtquellenanordnungen aufweisen, in einem großen Gebäude mittels einer Zwei-draht-Versorgungsleitung installiert und mit Energie und den notwendigen Dateninformationen versorgt werden, um eine Stallausleuchtung mit wahlweise einer von zumindest zwei unterschiedlichen Farben zu bewirken.

Der Aufbau der Beleuchtungsvorrichtung ermöglicht es auch, dass mit unterschiedlichen Lichtquellen ausgestattete Leuchten unterschiedlich angesteuert werden können, indem die in dem jeweiligen Logikmodul hinterlegten Daten jeweils individuell eingestellt werden können. So kann beispielsweise von einem ersten Logikmodul bei einer bestimmten Frequenz eine LED einer ersten Farbe angeschaltet werden, sodass die LED der ersten Farbe Licht emittiert und in einem anderen Logikmodul bei der gleichen Frequenz eine LED der ersten Farbe nicht angeschaltet werden, sodass diese LED der ersten Farbe kein Licht emittiert. Dabei können unterschiedliche Kombinationen von hinterlegten Daten in den Logikmodulen zu unterschiedlichen Schaltungen der Lichtquellen führen. Die Beleuchtungsvorrichtung kann somit individuell an die gewünschte Beleuchtung oder das gewünschte Beleuchtungsschema angepasst werden.

Erfindungsgemäß ist die Beleuchtungsvorrichtung fortgebildet durch eine Steuerungseinrichtung, die eine Lichtbestimmungseinheit, insbesondere eine Benutzerschnittstelle, aufweist zur Bestimmung eines in der Frequenz zu codierenden Kanals und/oder einer in der Frequenz zu codierenden Farbe und/oder zur Bestimmung einer Soll-Beleuchtungsstärke, und die ausgebildet ist, um
auf das Energieversorgungssignal die Frequenz aufzumodulieren, insbesondere in Abhängigkeit von dem in der Frequenz zu codierenden Kanal oder den mehreren in der Frequenz zu codierenden Kanälen und/oder der in der Frequenz zu codierenden Farbe oder den mehreren in der Frequenz zu codierenden Farben, und/oder
auf das Energieversorgungssignal einen Tastgrad und/oder eine Impulsdauer aufzumodulieren, insbesondere in Abhängigkeit von der definierten Soll-Beleuchtungsstärke, und den Tastgrad und/oder die Impulsdauer des Energieversorgungssignals zu steuern, sodass die Energieversorgung der Lichtquellen, bei denen die elektrische Versorgung durch das Logikmodul freigegeben ist, mit der elektrischen Energie mit dem zugewiesenen Tastgrad und/oder der zugewiesenen Impulsdauer aus dem Energieversorgungssignal erfolgt.

Eine solche Steuerungseinrichtung dient als Bedienungseinheit für einen Benutzer, um darüber die Lichtsteuerung der Beleuchtungsvorrichtung vorzunehmen, insbesondere eine gewünschte Farbe oder Beleuchtungsstärke einzustellen oder zeitliche Abläufe zu programmieren. Die Steuerungseinrichtung kann hierzu über eine eigene Benutzerschnittstelle verfügen, die zur Eingabe von Steuerungsbefehlen dient. Alternativ oder zusätzlich kann die Steuerungseinrichtung auch eine Datenschnittstelle aufweisen, über die Steuerungsbefehle von einem anderen Bedienerterminal empfangen werden, beispielsweise von einem zentralen Steuerungsrechner, der Licht, Klima und gegebenenfalls weitere Funktionen im Stallgebäude steuert.

Vorzugsweise wird die Spannung und/oder die Stromstärke derart gesteuert, dass die elektrische Energie die zugewiesene Frequenz aufweist. Wird die Spannung gesteuert, so liegt vorzugsweise das Spannungssignal in Form eines Rechtecksignals vor, wobei die Spannung abwechselnd einen Wert U1 oder einen Wert U0 aufweist. Bei einer Spannung mit dem Wert U0 beträgt die Spannung vorzugsweise 0 V. Bei einer Spannung mit dem Wert U1 kann die Spannung beispielsweise 48 V betragen. Vorzugsweise weist das Signal der elektrischen Energie eine Periodendauer auf, die das zeitliche Intervall kennzeichnet, indem einmal die konstante Spannung U1 und daran anschließend die konstante Spannung U0 vorliegt. Vorzugsweise weist das Signal der elektrischen Energie eine Impulsdauer auf, wobei die Impulsdauer die Dauer ist, während der innerhalb einer Periodendauer die konstante Spannung U1 vorliegt. Die Frequenz entspricht dem Kehrwert der Periodendauer. Der Tastgrad entspricht dem Wert, der sich bei Teilung von der Impulsdauer durch die Periodendauer ergibt.

Mittels Anpassung des Tastgrads kann die Beleuchtungsstärke eingestellt werden. So ergibt sich bei einem hohen Tastgrad eine hohe Strahlungsintensität und bei einem niedrigen Tastgrad eine niedrige Strahlungsintensität.

Ein Vorteil einer solchen Beleuchtungsvorrichtung liegt darin, dass durch Anpassung der Frequenz und des Tastgrads sowohl ganz bestimmte Lichtquellen angesteuert werden können als auch die Strahlungsintensität der Lichtquellen, die angeschaltet werden, eingestellt werden kann. Somit ist eine Dimmfunktion der Lichtquellen lediglich durch Änderung des Tastgrads möglich. Das Logikmodul muss daher lediglich die Frequenz der Versorgungsspannung (oder des Versorgungsstroms) mit vorbestimmten Werten vergleichen und interpretieren, um eine Lichtfarbe daraus zu bestimmen, wohingegen keine solche logische Auswertung für die Lichtstärke erforderlich ist, da die Lichtstärke sich in direkter Wirkung aus dem Tastgrad bzw. der Impulsdauer ergibt. Die Notwendigkeit eines aufwendigen Logikmoduöls in jeder Leuchte zur Steuerung von Lichtfarbe und - intensität oder die Notwendigkeit von Hochpass, Band- und Tiefpassfiltern entfällt daher.

In einer besonders bevorzugten Ausführungsform ist das Logikmodul ausgebildet, um die erste und zweite Lichtquelle und die gegebenenfalls weiteren Lichtquellen so anzusteuern, dass die erste Lichtquelle mit einem ersten Anteil der elektrischen Energie aus dem Energieversorgungssignal versorgt wird und die zweite Lichtquelle mit einem zweiten, vom ersten Anteil verschiedenen Anteil der elektrischen Energie aus dem Energieversorgungssignal versorgt wird und jede der gegebenenfalls weiteren Lichtquellen mit einem entsprechend weiteren Anteil der elektrischen Energie aus dem Energieversorgungssignal versorgt wird, und den ersten und den zweiten und die gegebenenfalls weiteren Anteile der elektrischen Energie so zu steuern, dass dadurch eine erste Strahlungsintensität der ersten Lichtquelle und eine hiervon verschiedene zweite Strahlungsintensität der zweiten Lichtquelle und gegebenenfalls Strahlungsintensitäten der weiteren Lichtquellen erzeugt werden, deren Mischung eine Strahlung mit der in der Frequenz codierten Farbe bewirkt.

Vorzugsweise sind der erste Anteil der elektrischen Energie und der zweite Anteil der elektrischen Energie und gegebenenfalls der entsprechend weitere Anteil der elektrischen Energie unabhängig voneinander einstellbar. Vorzugsweise können der erste Anteil der elektrischen Energie und der zweite Anteil der elektrischen Energie und gegebenenfalls der entsprechend weitere Anteil der elektrischen Energie unterschiedliche Energien aufweisen.

Bei einer solchen Ausgestaltung kann durch Mischung des Lichts von zwei unterschiedlichen Lichtquellen das gesamte Farbspektrum zwischen den beiden Farben der beiden Lichtquellen erzeugt werden und bei drei Lichtquellen mit unterschiedlichen Elementarfarben (z.B. RGB) kann das gesamte Farbspektrum erzeugt werden, indem den Lichtquellen unterschiedliche Energieversorgungssignale oder Anteile der Energieversorgungssignale zugewiesen werden.

Bei einer solchen Ausführungsform ist es besonders vorteilhaft, dass die unterschiedlichen Lichtquellen mit unterschiedlichen Strahlungsintensitäten betrieben werden können. Dadurch wird in Kombination mit verschiedenfarbigen Lichtquellen die Beleuchtung mit Licht mit Farben aus einem großen Farbspektrum ermöglicht.

Weiter ist es bevorzugt, wenn das Logikmodul ausgebildet ist, um in Abhängigkeit von dem in der Frequenz codierten Kanal oder der mehreren in der Frequenz codierten Kanäle eine elektrische Versorgung der gegebenenfalls weiteren Lichtquellen freizugeben, sodass die gegebenenfalls weiteren Lichtquellen mit der elektrischen Energie oder einem Anteil der elektrischen Energie beaufschlagt werden und Licht emittieren, oder zu blockieren, sodass die gegebenenfalls weiteren Lichtquellen nicht mit der elektrischen Energie beaufschlagt werden und kein Licht emittieren.

Weiter ist es bevorzugt, wenn die Beleuchtungsvorrichtung umfasst: eine Versorgungsleitung zur Leitung des elektrischen Energieversorgungssignals mit genau zwei elektrischen Leitungen, wobei das Logikmodul, und vorzugsweise die erste Lichtquelle und die zweite Lichtquelle und die gegebenenfalls weiteren Lichtquellen, an der Versorgungsleitung angeordnet und elektrisch mit der Versorgungsleitung verbunden ist und/oder einen Verpolungsschutz, insbesondere in Form eines Gleichrichters, der mit dem Logikmodul elektrisch verbunden ist und das elektrische Energieversorgungssignal mit einer vorbestimmten Polung an das Logikmodul weiterleitet.

Mit einem solchen Verpolungsschutz kann das Logikmodul vor einer Energiezufuhr mit einer falschen Polung geschützt werden. Ferner können die LEDs vor einer Energiezufuhr mit einer falschen Polung geschützt werden. Der Verpolungsschutz ist dabei vorzugsweise unmittelbar neben dem Logikmodul und/oder in der Leuchte angeordnet. Vorzugsweise ist der Verpolungsschutz ein elektrischer Verpolungsschutz. Weiter bevorzugt ist der Verpolungsschutz elektrisch zwischen der Versorgungsleitung und dem Logikmodul angeordnet.

Vorzugsweise ist die Versorgungsleitung ausgebildet, um mit einer Gleichspannung, insbesondere einer getakteten Gleichspannung mit einer bestimmten, steuerbaren Frequenz und einem bestimmten, steuerbaren Tastgrad, beaufschlagt zu werden. Die Frequenz dient hierbei der Farbinformationsübermittlung und der Tastgrad der Beleuchtungsstärkeninformationsübermittlung. Vorzugsweise umfasst die Versorgungsleitung eine isolierende Umhüllung, wobei die zwei elektrischen Leitungen in der isolierenden Umhüllung angeordnet sind. Dadurch können die zwei elektrischen Leitungen vor Umgebungseinflüssen, insbesondere vor Wasser, geschützt werden. Außerdem können so die zwei elektrischen Leitungen voneinander elektrisch isoliert werden. Es ist bevorzugt, wenn die isolierende Umhüllung einen Kunststoff, insbesondere in Form eines Elastomers, umfasst oder daraus besteht.

Weiter ist es bevorzugt, wenn die Beleuchtungsvorrichtung umfasst: mehrere Lichtquellenanordnungen oder mehrere Leuchten, die jeweils ein Logikmodul und mindestens eine Lichtquellenanordnung, vorzugsweise mehrere Lichtquellenanordnungen umfassen, wobei die eine oder mehreren Leuchten vorzugsweise ein zur Durchdringung einer isolierenden Umhüllung einer Versorgungsleitung ausgebildetes Kontaktierungsbauteil umfassen und mittels dieses Kontaktierungsbauteils mit einer Versorgungsleitung, vorzugsweise einer Versorgungsleitung nach dem vorhergehenden Anspruch, elektrisch verbunden sind. Gemäß dieser Ausführungsform umfasst eine Leuchte mehrere Lichtquellenanordnungen, die beispielsweise in einer Längsrichtung zueinander beabstandet angeordnet sein können und alle von dem einen Logikmodul der Leuchte versorgt werden. Insbesondere können mehrere solche Leuchten vorgesehen sein, die dann jeweils ein Logikmodul enthalten.

Vorzugsweise kann das Kontaktierungsbauteil eine isolierende Umhüllung der Versorgungsleitung durchdringen, wobei ein elektrischer Kontakt zwischen dem Kontaktierungsbauteil und den elektrischen Leitungen der Versorgungsleitung entsteht.

Noch weiter ist es bevorzugt, wenn das Energieversorgungssignal ein pulsweitenmoduliertes Signal ist und das pulsweitenmodulierte Signal einen Tastgrad und eine Frequenz aufweist, wobei vorzugsweise die elektrische Spannung des Energieversorgungssignals mit der Frequenz des Signals zwischen einem ersten Spannungswert, vorzugsweise 100 % der elektrischen Spannung, und einem zweiten Spannungswert, vorzugsweise 0 % oder -100 % der elektrischen Spannung, wechselt und/oder wobei vorzugsweise der elektrische Strom des Energieversorgungssignals mit der Frequenz des Signals zwischen einem ersten Stromwert, vorzugsweise 100 % des elektrischen Stroms, und einem zweiten Stromwert, vorzugsweise 0 % oder -100 % des elektrischen Stroms, wechselt.

Ferner ist es bevorzugt, wenn die Steuerungseinrichtung ausgebildet ist, um in Abhängigkeit von der Soll-Beleuchtungsstärke dem Energieversorgungssignal einen Tastgrad zuzuweisen, sodass die elektrische Versorgung der Lichtquellen mit elektrischer Energie in Form eines Signals mit dem zugewiesenen Tastgrad erfolgt, und/oder in Abhängigkeit von der Soll-Beleuchtungsstärke dem Energieversorgungssignal eine Impulsdauer zuzuweisen, sodass die elektrische Versorgung der Lichtquellen mit elektrischer Energie in Form eines Signals mit der zugewiesenen Impulsdauer erfolgt, und/oder in Abhängigkeit von einer Soll-Beleuchtungsstärke dem Energieversorgungssignal eine Periodendauer zuzuweisen, sodass die elektrische Versorgung der Lichtquellen mit elektrischer Energie in Form eines Signals mit der zugewiesenen Periodendauer erfolgt.

Ferner ist es bevorzugt, wenn dabei in Abhängigkeit von einem Farbwert und/oder einem Zeitwert, insbesondere in Abhängigkeit von der Tageszeit, dem Energieversorgungssignal eine Frequenz zugewiesen wird, sodass die Versorgung der Lichtquellen mit dem Energieversorgungssignal in Abhängigkeit von dem Farbwert und/oder dem Zeitwert, insbesondere der Tageszeit, gesteuert, insbesondere mit Anteilen des Energieversorgungssignals oder vollständig freigegeben wird oder blockiert wird.

Somit kann auf vorteilhafte Weise automatisiert nach einem bestimmten Programm die Frequenz verändert werden. Ferner kann vorzugsweise in Abhängigkeit von einem Zeitwert, insbesondere in Abhängigkeit von der Tageszeit, der elektrischen Energie ein Tastgrad zugewiesen werden. Damit kann auf vorteilhafte Weise automatisch nach einem bestimmten Programm die Strahlintensität verändert werden.

Weiter ist es bevorzugt, wenn die zugewiesenen Frequenzen mindestens 300 Hz, besonders bevorzugt mindestens 400 Hz, insbesondere mindestens 500 Hz betragen und/oder die zugewiesenen Frequenzen höchstens 2500 Hz, besonders bevorzugt höchstens 2250 Hz, insbesondere höchstens 2000 Hz betragen.

Mit einer solchen Mindestfrequenz kann bei Weiterleitung der Frequenz an die Lichtquellen ein flackerfreies und für Tiere, insbesondere für Geflügeltiere (Vögel), als Artgerecht empfundenes Licht erzeugt werden, was sich vorteilhaft auf das Tierwohl auswirkt. Mit einer solchen Maximalfrequenz können aggressives Verhalten, hohe Sterberaten und somit Leistungsverluste vermieden werden und unvorteilhafte elektromagnetische Abstrahlung vermieden werden.

Weiter ist es bevorzugt, wenn die Steuerungseinrichtung mit einem Treiber signaltechnisch verbunden ist und der Treiber mit einer Versorgungsleitung, vorzugsweise einer Versorgungsleitung nach Anspruch 5, verbunden ist, wobei der Treiber die Versorgungsleitung mit dem Energieversorgungssignal beaufschlagt, wobei der Treiber vorzugsweise eine Nennausgangsspannung von nicht mehr als 48 V aufweist.

Die Nennausgangsspannung kann alternativ beispielsweise 24 V oder einen davon abweichenden Wert aufweisen. Vorzugsweise sind die Steuerungseinrichtung und der Treiber in einem Bauteil zusammengefasst.

Noch weiter ist es bevorzugt, wenn mindestens eine der Lichtquellen, vorzugsweise alle Lichtquellen als Leuchtdiode(n) ausgebildet ist/sind und wobei vorzugsweise eine Lichtquellenanordnung mindestens zwei Leuchtdioden mit unterschiedlichen Farben umfasst, wobei die Farben ausgewählt sind aus der folgenden Gruppe: Rot, Grün, Blau, Weiß, Ultraviolett.

Beispielsweise kann die Lichtquellenanordnung drei LEDs der Farben Rot, Grün und Blau umfassen. Dies ermöglicht eine umfassende Mischung der Farben des gesamten Farbspektrums.

Ferner ist es bevorzugt, wenn die Beleuchtungsvorrichtung und/oder die Versorgungsleitung eine Länge von mindestens 1 m oder mindestens 5 m oder mindestens 10 m oder mindestens 15 m oder mindestens 20 m aufweist.

Ferner ist es bevorzugt, wenn die Steuerungseinrichtung ausgebildet ist, um die Beaufschlagung der Versorgungsleitung mit elektrischer Energie so zu steuern, dass die Beaufschlagung der Versorgungsleitung mit elektrischer Energie in Form eines pulsweitenmodulierten Signals ein zeitlich veränderliches pulsweitenmoduliertes Signal aufweist und das Signal nach einem sich wiederholenden Schema abläuft, wobei das Schema vorzugsweise eine Dauer von 24 Stunden aufweist. Das Signal kann beispielsweise nach einem sich wiederholenden Tag-Nacht-Schema anlaufen. Vorzugsweise wird dabei eine natürliche Beleuchtung durch die Sonne simuliert. Dabei ist es besonders bevorzugt, wenn zu jeder Zeit der Zeitachse des Schemas mittels der Lichtquellen eine Mindesthelligkeit erzeugt wird.

Gemäß einem zweiten Aspekt wird die eingangs genannte Aufgabe gelöst durch eine Steuerungseinrichtung zur Steuerung einer Beleuchtungsvorrichtung nach einem der vorhergehenden Ansprüche, wobei die Steuerungseinrichtung eine Anschlusseinheit für eine vorzugsweise genau zweiadrige Versorgungsleitung umfasst und ausgebildet ist, um die Anschlusseinheit mit einem Energieversorgungssignal zu beaufschlagen und dem Energieversorgungssignal zumindest zwei alternative unterschiedliche Frequenzen und/oder zwei alternative unterschiedliche Tastgrade und/oder zwei alternative unterschiedliche Impulsdauern aufzumodulieren, sodass die Beaufschlagung der Versorgungsleitung mit dem Energieversorgungssignal in Form zumindest eines von zumindest zwei unterschiedlichen Energieversorgungssignalen erfolgt, wobei die Beaufschlagung der Versorgungsleitung mit dem Energieversorgungssignal vorzugsweise mit einem vorbestimmten zeitlich gesteuerten Schema erfolgt und das Schema vorzugsweise eine Dauer von 24 Stunden aufweist.

Gemäß einem dritten Aspekt wird die eingangs genannte Aufgabe gelöst durch ein Verfahren zum Steuern einer Beleuchtungsvorrichtung, vorzugsweise einer Beleuchtungsvorrichtung nach einem der vorhergehenden Ansprüche, umfassend Beaufschlagen einer Versorgungsleitung zur Energieübertragung und Signalübertragung, die vorzugsweise genau zwei elektrische Leitungen aufweist, mit einem Energieversorgungssignal in Form eines Signals mit einer zugewiesenen Frequenz, Auslesen der Frequenz des empfangenen Energieversorgungssignals mit einem in einer Leuchte angeordneten Logikmodul, das an der Versorgungsleitung angeordnet und elektrisch mit der Versorgungsleitung verbunden ist, Vergleichen der Frequenz des empfangenen Energieversorgungssignals mit in dem Logikmodul hinterlegten Daten, Steuern einer in der Leuchte angeordneten ersten Lichtquelle, wobei in Abhängigkeit von dem Vergleich zwischen der Frequenz des Energieversorgungssignals und den in dem Logikmodul hinterlegten Daten eine elektrische Versorgung der ersten Lichtquelle freigegeben wird, sodass die erste Lichtquelle mit der elektrischen Energie beaufschlagt oder blockiert wird, sodass die erste Lichtquelle vollständig, teilweise oder nicht mit dem Energieversorgungssignal beaufschlagt wird und dadurch Licht emittiert oder kein Licht emittiert, und Steuern einer in der Leuchte angeordneten zweiten Lichtquelle, wobei in Abhängigkeit von dem Vergleich zwischen der Frequenz des Energieversorgungssignals und den in dem Logikmodul hinterlegten Daten eine elektrische Versorgung der zweiten Lichtquelle freigegeben wird, sodass die zweiten Lichtquelle mit der elektrischen Energie beaufschlagt oder blockiert wird, sodass die zweiten Lichtquelle vollständig, teilweise oder nicht mit dem Energieversorgungssignal beaufschlagt wird und dadurch Licht emittiert oder kein Licht emittiert.

Besonders bevorzugt ist es, wenn das Verfahren umfasst: Steuern von zumindest einer weiteren, in der Leuchte angeordneten Lichtquelle, wobei in Abhängigkeit von dem Vergleich zwischen der Frequenz des Energieversorgungssignals und den in dem Logikmodul hinterlegten Daten eine elektrische Versorgung der weiteren Lichtquelle freigegeben wird, sodass die weitere Lichtquelle mit der elektrischen Energie beaufschlagt oder blockiert wird, sodass die weitere Lichtquelle vollständig, teilweise oder nicht mit dem Energieversorgungssignal beaufschlagt wird und dadurch Licht emittiert oder kein Licht emittiert.

Weiter ist es bevorzugt, wenn das Verfahren umfasst: Steuern einer Beleuchtungsstärke der ersten, zweiten und gegebenenfalls weiteren Lichtquellen, wobei dem Energieversorgungssignal, insbesondere in Abhängigkeit von einer definierten Soll-Beleuchtungsstärke, ein Tastgrad und/oder eine Impulsdauer zugewiesen wird und der Tastgrad und/oder die Impulsdauer des Energieversorgungssignals gesteuert werden, sodass die Energieversorgung der Lichtquellen, bei denen das Energieversorgungssignal durch das Logikmodul vollständig oder reduziert freigegeben ist, mit dem vollen oder reduziertem Energieversorgungssignal mit dem zugewiesenen Tastgrad und/oder der zugewiesenen Impulsdauer erfolgt.

Gemäß einem vierten Aspekt wird die eingangs genannte Aufgabe gelöst durch eine Verwendung einer Beleuchtungsvorrichtung der zuvor beschriebenen Bauweise innerhalb eines Stallgebäudes für Nutztiere, insbesondere innerhalb eines Stallgebäudes zur Haltung von Legehennen. Ein Vorteil einer solchen Verwendung einer Beleuchtungsvorrichtung innerhalb eines Stallgebäudes liegt darin begründet, dass die beschriebene Beleuchtungsvorrichtung relativ kostengünstig ist. Dies stellt insbesondere für Stallgebäude, in denen typischerweise verhältnismäßig lange Beleuchtungsvorrichtungen mit vielen Lichtquellen benötigt werden, einen erheblichen Vorteil dar.

Ein weiterer Vorteil einer solchen Verwendung einer Beleuchtungsvorrichtung innerhalb eines Stallgebäudes liegt darin begründet, dass die mit der Beleuchtungsvorrichtung herstellbare Beleuchtung sowohl eine Farbvariation als auch eine Dimmfunktion ermöglicht, wodurch je nach Tageszeit ein für die Tiere vorteilhaftes Licht erzeugt werden kann. Dies kann besonders förderlich für das Tierwohl der Tiere sein.

Ein zusätzlicher Vorteil einer solchen Verwendung einer Beleuchtungsvorrichtung innerhalb eines Stallgebäudes liegt darin begründet, dass die verwendeten Frequenzen in einem Bereich liegen, bei dem das erzeugte Licht der einerseits von den Tieren als flackerfrei empfunden wird und bei dem andererseits keine elektromagnetischen Abstrahlungen von einer unerwünschten Höhe mit den damit verbundenen nachteiligen Effekten auftreten.

Besonders bevorzugt ist die Verwendung einer Beleuchtungsvorrichtung zur Ausleuchtung eines Bodenbereichs unterhalb einer Voliere und/oder einer Etage einer Voliere und/oder einer Futterschale, wobei die Beleuchtungsvorrichtung vorzugsweise entlang der Voliere mit der Voliere verbunden ist.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Es zeigen:
- Fig. 1:: eine schematische Ansicht einer Beleuchtungsvorrichtung;
- Fig. 2:: eine schematische Ansicht einer Beleuchtungsvorrichtung mit einer Steuerungseinrichtung, einem Treiber und einer Versorgungsleitung;
- Fig. 3a:: ein Diagramm mit einem Signal der elektrischen Energie mit einer ersten Impulsdauer;
- Fig. 3b:: ein Diagramm mit einem Signal der elektrischen Energie mit einer zweiten Impulsdauer;
- Fig. 4a:: eine schematische Ansicht einer Leuchte mit mehreren Lichtquellen, die mit einer Versorgungsleitung verbunden ist;
- Fig. 4b:: eine schematische Ansicht mehrerer Leuchten, die mit einer Versorgungsleitung verbunden sind;
- Fig. 5a:: eine schematische Ansicht eines Querschnitts einer Versorgungsleitung;
- Fig. 5b:: eine schematische Ansicht von zwei Verbindungen zwischen zwei Leuchten und einer Versorgungsleitung;
- Fig. 6a;: eine schematische Ansicht eines Querschnitts eines Gehäuses einer Leuchte;
- Fig. 6b:: eine schematische Ansicht eines Querschnitts einer Verbindung zwischen einer Leuchte und einer Versorgungsleitung;
- Fig. 7:: eine schematische Ansicht eines Querschnitts einer Voliere mit zwei Beleuchtungsvorrichtungen;
- Fig. 8: Eine schematische Ansicht eines Querschnitts eines Stalls für Legehennen mit mehreren Volieren und mehreren Beleuchtungsvorrichtungen.

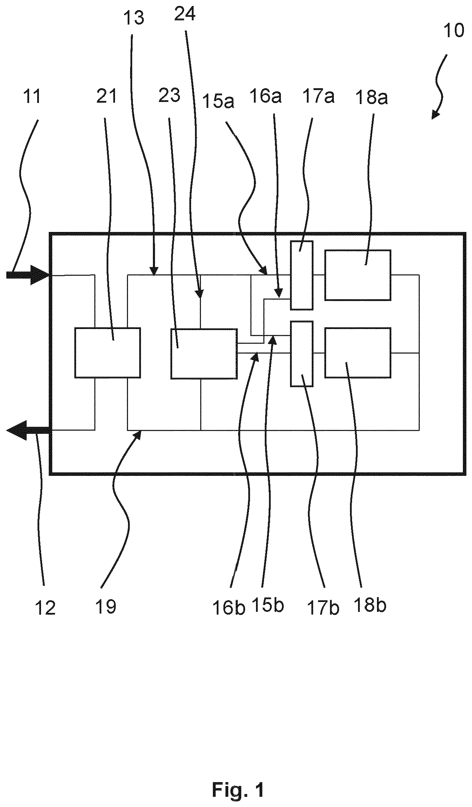

Fig. 1 zeigt eine Beleuchtungsvorrichtung mit einer Leuchte 10, die mit einer ersten Leitung 11 und mit einer zweiten Leitung 12 mit einer Versorgungsleitung (nicht gezeigt) verbunden ist. Wenn die Versorgungsleitung mit elektrischer Energie beaufschlagt wird, dann wird die Beleuchtungsvorrichtung über die erste Leitung 11 und die zweite Leitung 12 mit elektrischer Energie versorgt. Die erste Leitung 11 und die zweite Leitung 12 bilden somit die Kontaktierung zur Versorgungsleitung. Die erste Leitung 11 und die zweite Leitung 12 sind mit einem elektrischen Verpolungsschutz 21 verbunden. Der Verpolungsschutz 21 in Form eines Gleichrichters sorgt dafür, dass die Polung an den mit dem Verpolungsschutz 21 verbundenen Leitungen 13 und 19 richtig anliegt. Ein Logikmodul 23 wird über die Leitung 13, die mit dem Verpolungsschutz 21 verbunden ist, und über die weitere Leitung 19, die ebenfalls mit dem Verpolungsschutz 21 verbunden ist, mit Energie versorgt. Das Logikmodul 23 umfasst ein Logikmodulauswertungsbauteil. Das Logikmodul 23 empfängt über eine Leitung 24, die mit der Leitung 13 verbunden ist, das Signal der elektrischen Energie, mit dem die Versorgungsleitung beaufschlagt ist. Das Logikmodulauswertungsbauteil des Logikmoduls 23 ist ausgebildet, um die Frequenz des Signals der elektrischen Energie auszulesen. Das Logikmodul 23 ist mit einer ersten Schaltleitung 16a mit einem ersten Schalter 17a verbunden und mit einer zweiten Schaltleitung 16b mit einem zweiten Schalter 17b verbunden. Der Schalter 17a und 17b kann bspw. als Halbleiterschaltelement, z.B. mit einem Transistor, ausgebildet ist. Denkbar ist auch eine integrale Ausbildung der Schalter 17a, b zusammen mit dem Logikmodul 23 als ein elektronisches Bauelement mit einem integrierten Schaltelement.

Der erste Schalter 17a ist über eine Leitung 15a mit der Leitung 13 verbunden. Und der zweite Schalter 17b ist über eine Leitung 15b ebenfalls mit der Leitung 13 verbunden. Der erste Schalter 17a ist über eine Leitung mit einer ersten Leuchtdiode 18a verbunden und kann über die erste Schaltleitung 16a von dem Logikmodul 23 in eine geöffnete Stellung geschaltet werden, wobei keine elektrische Verbindung zwischen der Leitung 15a und der ersten Leuchtdiode 18a besteht oder in eine geschlossene Stellung geschaltet werden, wobei eine elektrische Verbindung zwischen der Leitung 15a und der ersten Leuchtdiode 18a hergestellt wird, sodass die erste Leuchtdiode 18a mit elektrischer Energie versorgt wird und Licht emittiert. Der zweite Schalter 17b ist über eine Leitung mit einer zweiten Leuchtdiode 18b verbunden und kann über die zweite Schaltleitung 16b von dem Logikmodul 23 in eine geöffnete Stellung geschaltet werden, wobei keine elektrische Verbindung zwischen der Leitung 15b und der zweiten Leuchtdiode 18b besteht oder in eine geschlossene Stellung geschaltet werden, wobei eine elektrische Verbindung zwischen der Leitung 15b und der zweiten Leuchtdiode 18b hergestellt wird, sodass die zweite Leuchtdiode 18b mit elektrischer Energie versorgt wird und Licht emittiert.

Beispielsweise kann es sich bei der ersten Leuchtdiode 18a um eine rote LED und bei der zweiten Leuchtdiode 18b um eine weiße LED handeln. In den in dem Logikmodul 23 hinterlegten Daten kann beispielsweise die Information gespeichert sein, dass bei einer Frequenz des Signals der elektrischen Energie von 500 Hz nur die rote LED - also nur die erste Leuchtdiode 18a - angeschaltet werden soll, bei einer Frequenz des Signals der elektrischen Energie von 1000 Hz die rote LED und die weiße LED - also die erste Leuchtdiode 18a und die zweite Leuchtdiode 18b - angeschaltet werden sollen und bei einer Frequenz des Signals der elektrischen Energie von 1500 Hz nur die weiße LED - also die zweite Leuchtdiode angeschaltet werden soll.

Erfolgt eine Energieversorgung über die Versorgungsleitung mit einem Signal der elektrischen Energie mit einer Frequenz von 500 Hz, so wird von dem Logikmodul 23 über die erste Schaltleitung 16a der erste Schalter 17a in die geschlossene Stellung gestellt, sodass die erste Leuchtdiode 18a mit Energie versorgt wird und Licht emittiert. Der zweite Schalter 17b wird in die geöffnete Stellung geschaltet, sodass die zweite Leuchtdiode 17b nicht mit elektrischer Energie versorgt wird und kein Licht emittiert.

Erfolgt eine Energieversorgung über die Versorgungsleitung mit einem Signal der elektrischen Energie mit einer Frequenz von 1000 Hz, so wird von dem Logikmodul 23 über die erste Schaltleitung 16a der erste Schalter 17a in die geschlossene Stellung gestellt, sodass die erste Leuchtdiode 18a mit elektrischer Energie versorgt wird und Licht emittiert. Außerdem wird von dem Logikmodul über die zweite Schalterleitung 16b der zweite Schalter 17b in die geschlossene Stellung gestellt, sodass die zweite Leuchtdiode 18b mit elektrischer Energie versorgt wird und Licht emittiert.

Erfolgt eine Energieversorgung über die Versorgungsleitung mit einem Signal der elektrischen Energie mit einer Frequenz von 1500 Hz, so wird von dem Logikmodul 23 über die erste Schaltleitung 16b der zweite Schalter 17b in die geschlossene Stellung gestellt, sodass die zweite Leuchtdiode 18b mit Energie versorgt wird und Licht weißes emittiert. Der erste Schalter 17a wird in die geöffnete Stellung geschaltet, sodass die erste Leuchtdiode 17a nicht mit elektrischer Energie versorgt wird und kein Licht emittiert.

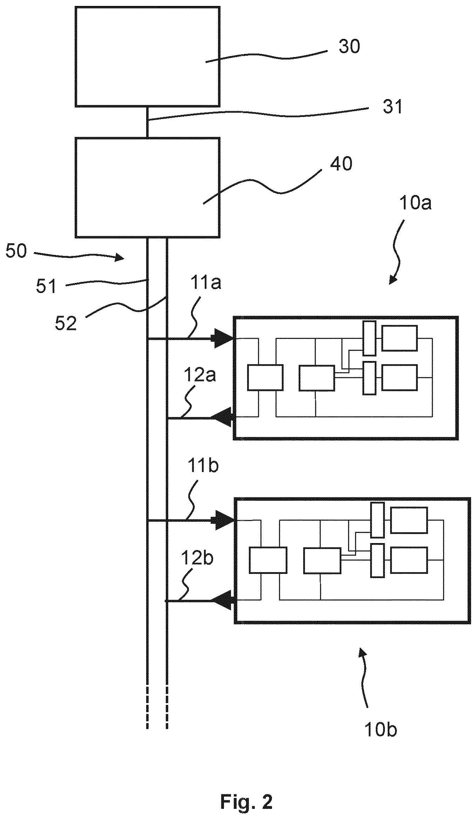

Fig. 2 zeigt eine Beleuchtungsvorrichtung mit zwei Leuchten 10a und 10b, die über eine Versorgungsleitung 50 mit elektrischer Energie versorgt werden. Eine Steuerungseinrichtung 30 ist mit einem Treiber 40 über eine Verbindungsleitung 31 verbunden. Die Steuerungseinrichtung 30 ist ausgebildet, um der elektrischen Energie, mit der die Versorgungsleitung 50 beaufschlagt werden soll, eine Frequenz zuzuweisen. Dabei erfolgt die Zuweisung der Frequenz des Signals der elektrischen Energie in Abhängigkeit von der Farbe, die mit den Lichtquellen erzeugt werden soll, oder mit den Farben, die mit den Lichtquellen erzeugt werden sollen. Die Steuerungseinrichtung weist der elektrischen Energie außerdem einen Tastgrad zu. Durch Einstellen des Tastgrads wird die Impulsdauer angepasst, sodass die Beleuchtungsstärke variiert werden kann. Das von der Steuerungseinrichtung 30 vorgegebene Signal der elektrischen Energie mit einer bestimmten Frequenz und einem bestimmten Tastgrad wird von dem Treiber 40 erzeugt. Der Treiber 40 beaufschlagt die mit dem Treiber 40 verbundene Versorgungsleitung 50 mit der entsprechenden elektrischen Energie. Die Versorgungsleitung weist eine erste Leitung 51 und eine zweite Leitung 52 auf. Jede der Leuchten ist mit einer ersten Leitung 11a, 11b mit der ersten Leitung 51 der Versorgungsleitung 50 verbunden und mit einer zweiten Leitung 12a, 12b mit der zweiten Leitung 52 der Versorgungsleitung 50 verbunden. So werden die Leuchten 10a, 10b über die Versorgungsleitung 50 mit der elektrischen Energie versorgt, die ein Signal mit einer von der Steuerungseinrichtung 30 vorgegebenen Frequenz und einem von der Steuerungseinrichtung 30 vorgegebenen Tastgrad aufweist. Der Aufbau der Leuchten 10a, 10b entspricht dabei vorzugsweise dem in Fig. 1 detailliert beschriebenen Aufbau. Entlang der Versorgungsleitung 50, insbesondere über eine Strecke von mehreren Metern, kann eine Vielzahl von weiteren Leuchten auf die gleiche Weise wie die Leuchten 10a, 10b angeordnet sein.

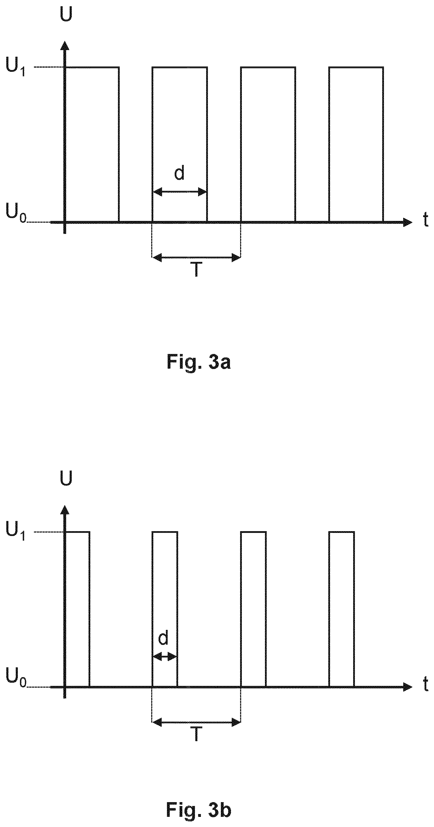

Fig. 3a zeigt ein Spannungssignal einer elektrischen Energie, mit der eine Versorgungsleitung beaufschlagt werden kann. Dabei ist die Spannung U über die Zeit t aufgetragen. Das Spannungssignal liegt in Form eines Rechtecksignals vor, wobei die Spannung abwechselnd den Wert U1 oder den Wert U0 aufweist. Bei einer Spannung mit dem Wert U0 beträgt die Spannung 0 V. Bei einer Spannung mit dem Wert U1 beträgt die Spannung beispielsweise 48 V. Die Periodendauer T kennzeichnet das zeitliche Intervall, indem einmal die konstante Spannung U1 und daran anschließend die konstante Spannung U0 vorliegt. Die Impulsdauer d ist die Dauer, die innerhalb einer Periodendauer die konstante Spannung U1 vorliegt. Die Frequenz entspricht dem Kehrwert der Periodendauer. Der Tastgrad entspricht dem Wert, der sich bei Teilung von der Impulsdauer d durch die Periodendauer T ergibt.

Fig. 3b zeigt ebenfalls ein Spannungssignal mit den gleichen Bezeichnungen wie in Fig. 3a beschrieben, wobei die Periodendauer und die Spannungswerte U1 und U0 gleich wie in Fig. 3a sind, mit dem Unterscheid, dass die Impulsdauer wesentlich kürzer ist bei gleicher Periodendauer. Dies hat im Vergleich zu dem Signal, das in Fig. 3a gezeigt wird zur Folge, dass die Beleuchtungsstärke der Lichtquellen, die die elektrische Energie mit diesem Signal empfangen, geringer ist.

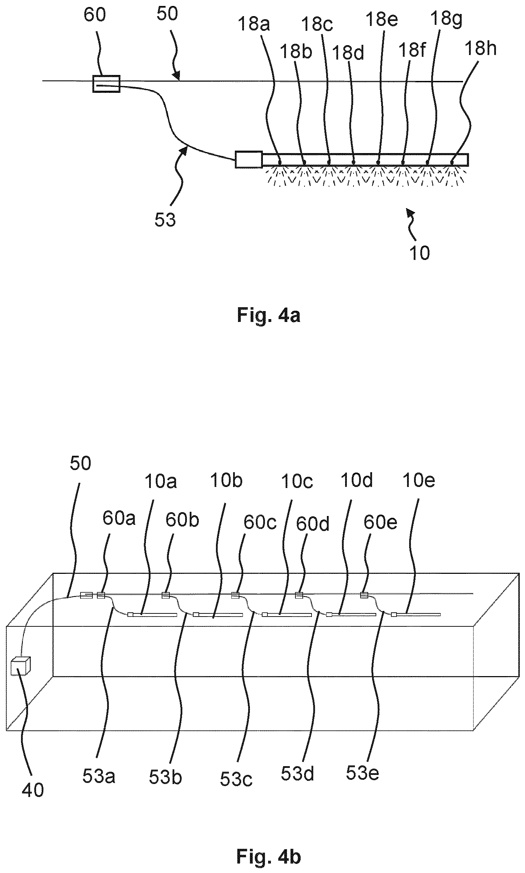

Fig. 4a zeigt eine Leuchte 10, die über eine Leitung 53 mit einer Versorgungsleitung 50 elektrisch verbunden ist. Die Verbindung zwischen der Leitung 53 und der Versorgungsleitung erfolgt mit einem Kontaktierungsbauteil 60. Die Leuchte 10 weist mehrere Lichtquellen 18a-h auf, die unterschiedlich farbige LEDs sein können. Die Lichtquellen werden von einem in der Leuchte vorhandenen Logikmodul in Abhängigkeit von der Frequenz des Signals der elektrischen Energie, das über die Versorgungsleitung 50 und die Leitung 53 zur Leuchte 10 gelangt, gesteuert.

Fig. 4b zeigt einen Treiber 40, der eine Versorgungsleitung 50 mit einer elektrischen Energie mit einem bestimmten Signal beaufschlagt. Mit der Versorgungsleitung 50 sind mehrere Leitungen 53a-e zu mehreren Leuchten 10a-e verbunden. Die Leuchten 10a-10e können wie die in Fig. 4a beschriebene Leuchte ausgebildet sein.

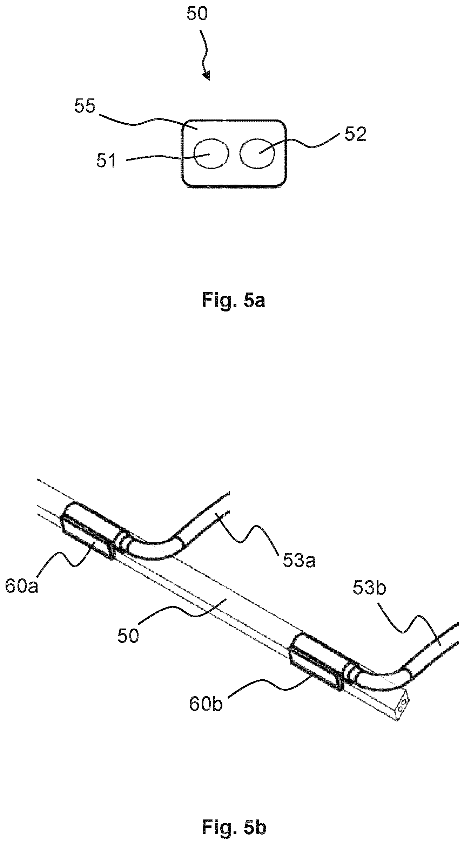

Fig. 5a zeigt einen Querschnitt einer Versorgungsleitung 50 mit genau zwei Leitungen, nämlich einer ersten Leitung 51 und einer zweiten Leitung 52. Die erste Leitung 51 und die zweite Leitung 52 sind in einer isolierenden Umhüllung 55 angeordnet. Dadurch sind einerseits die erste Leitung 51 und die zweite Leitung 52 voneinander elektrisch isoliert. Außerdem werden die erste Leitung 51 und die zweite Leitung 52 mittels der diese Leitungen umgebenden isolierenden Umhüllung 55 vor Umgebungseinflüssen, insbesondere vor Wasser, geschützt.

Fig. 5b zeigt eine Versorgungsleitung 50 an der zwei Leitungen 53a, 53b, die jeweils mit Leuchten (nicht gezeigt) verbunden sind, angeordnet sind. Die Versorgungsleitung ist wie in Fig. 5a beschrieben, insbesondere mit einer ersten und einer zweiten Leitung, ausgeführt. Die Verbindung zwischen den Leitungen 53a, 53b erfolgt mit Hilfe von Kontaktierungsbauteilen 60a, 60b. Diese besitzen Kontaktierungselemente, die in die Versorgungsleitung eingebracht werden können, indem die Kontaktierungselemente die isolierende Umhüllung 55 der Versorgungsleitung 50 durchdringen und eins der Kontaktierungselemente mit der ersten Leitung der Versorgungsleitung in Verbindung steht und somit elektrisch mit der ersten Leitung der Versorgungsleitung verbunden ist und ein weiteres der Kontaktierungselemente mit der zweiten Leitung der Versorgungsleitung in Verbindung steht und somit elektrisch mit der zweiten Leitung der Versorgungsleitung verbunden ist.

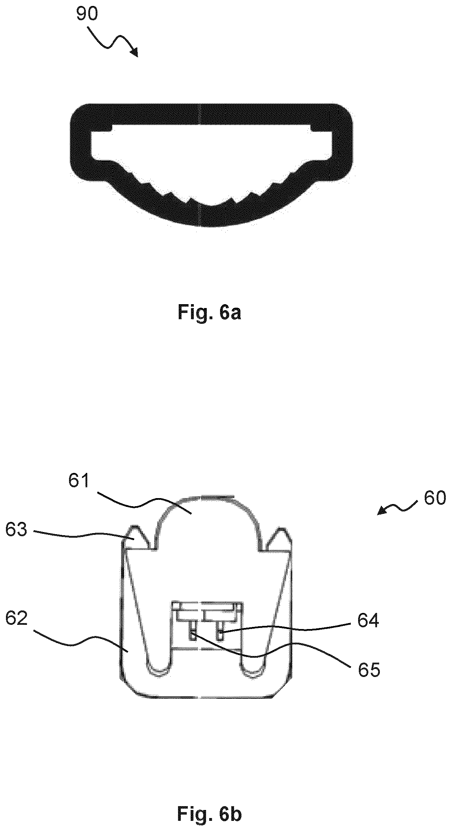

Fig. 6a zeigt einen Querschnitt eines transparenten Gehäuses 90 einer Leuchte. Mit einem solchen transparenten Gehäuse 90 wird ein robuster Schutz der in dem Gehäuse befindlichen Teile, wie den Lichtquellen, gewährleistet. Außerdem wird mit einer solchen Ausgestaltung des Gehäuses 90 eine vorteilhafte Lichtverteilung ohne Blendwirkung erzielt. Die Blendwirkung wird dabei verringert durch eine entsprechende Ausgestaltung von Optikelementen, die integraler Bestandteil des Gehäuses sind und die sich vorzugsweise im Innenraum des Gehäuses 90 erstrecken. Die Optikelemente bilden dabei vorzugsweise Elemente einer Optik nach dem Stufenlinsen- oder Fresnellinsen-Prinzip.

Fig. 6b zeigt einen Querschnitt eines Kontaktierungsbauteil 60, das wie in Fig. 4a und Fig. 5b beschrieben mit einer Versorgungsleitung verbindbar ist. Das Kontaktierungsbauteil 60 weist ein erstes Bauteil 61 und ein zweites Bauteil 62 auf. Zur Installation eines Kontaktierungsbauteils an einer Versorgungsleitung wird zwischen dem ersten Bauteil 61 und dem zweiten Bauteil 62 eine Versorgungsleitung platziert. An dem ersten Bauteil 61 sind zwei Kontaktierungselemente 64, 65 angeordnet. Das erste Bauteil 61 und das zweite Bauteil 62 werden dann aufeinandergepresst, beispielsweise mittels einer Zange, sodass die Kontaktierungselemente 64, 65 die isolierende Umhüllung der Versorgungsleitung durchdringen und jedes der Kontaktierungselemente 64, 65 mit einer der Leitungen der Versorgungsleitung in Verbindung steht, wodurch eine elektrische Verbindung zur Versorgungsleitung hergestellt wird.

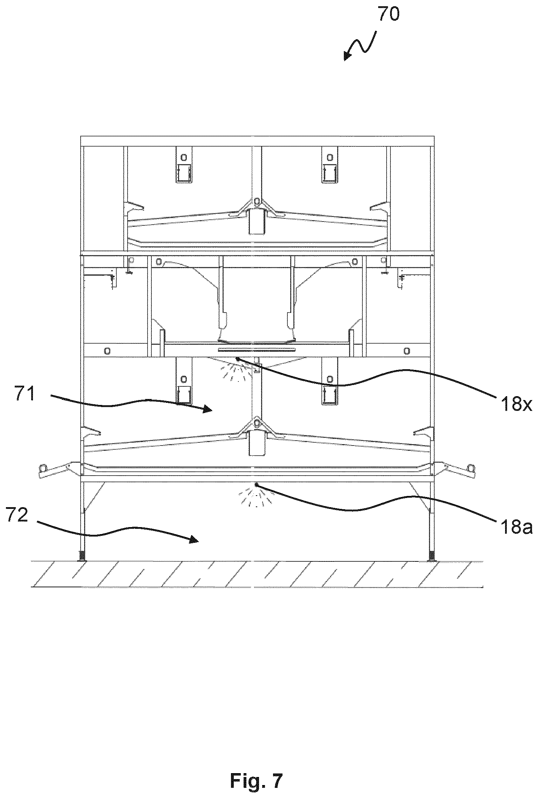

Fig. 7 zeigt einen Querschnitt einer Voliere 70 für einen Stall, insbesondere für Legehennen, mit mehreren Ebenen. Um den Bodenbereich 72 zu beleuchten, ist eine Lichtquelle 18a, die Bestandteil einer Beleuchtungsvorrichtung ist, die sich entlang der Voliere erstreckt und eine Vielzahl von weiteren Lichtquellen aufweist, in dieser Ebene angeordnet. Um die erste Ebene 71 zu beleuchten, ist eine Lichtquelle 18x, die Bestandteil einer weiteren Beleuchtungsvorrichtung ist, die sich entlang der Voliere erstreckt und eine Vielzahl von weiteren Lichtquellen aufweist, in dieser Ebene angeordnet.

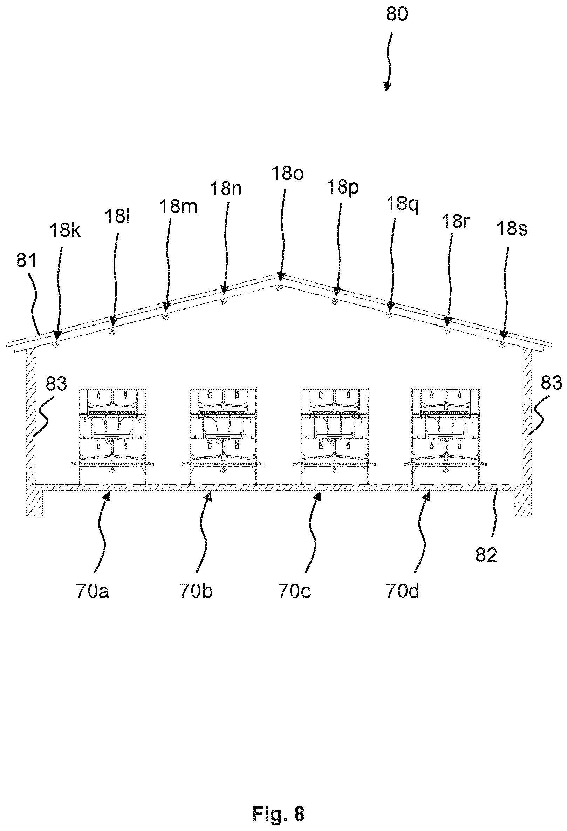

Fig. 8 zeigt einen Querschnitt eines Stalls 80 für Legehennen mit einem Dach 81, Seitenwänden 83 und einem Boden 82. In dem Stall 80 sind vier Volieren 70a-d nebeneinander angeordnet, wobei jede der Volieren Lichtquellen und Beleuchtungsvorrichtungen wie in Fig. 7 beschrieben, aufweisen kann. Ferner sind an der Innenseite des Dachs 81 mehrere Lichtquellen 18k-s angeordnet, die Teil einer Beleuchtungsvorrichtung oder mehrerer Beleuchtungsvorrichtungen sind. Diese Lichtquellen dienen der Beleuchtung des Stallinnenraums des Stalls 80. In Verbindung mit den Lichtquellen, die an der Innenseite des Dachs 81 angeordnet sind und den Lichtquellen, die an den Volieren 70a-d angeordnet sind, können der Stallinnenraum des Stalls 80 und bestimmte Bereiche an und um die Volieren individuell angepasst und zeitlich veränderbar beleuchtet werden.

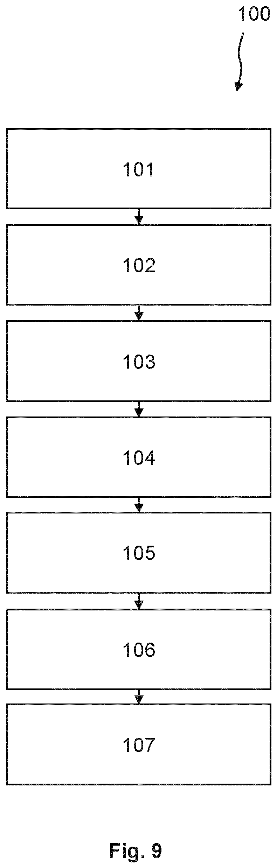

Fig. 9 zeigt eine schematische Darstellung eines Ausführungsbeispiels des Verfahrens 100 zum Steuern einer Beleuchtungsvorrichtung, vorzugsweise einer Beleuchtungsvorrichtung. Im Schritt 101 erfolgt ein Beaufschlagen einer Versorgungsleitung zur Energieübertragung und Signalübertragung, die genau zwei elektrische Leitungen aufweist, mit elektrischer Energie in Form eines Signals mit einer zugewiesenen Frequenz. Im Schritt 101 erfolgt ein Auslesen der Frequenz des empfangenen Signals von einem Logikmodul, das an der Versorgungsleitung angeordnet und elektrisch mit der Versorgungsleitung verbunden ist. In Schritt 102 erfolgt ein Vergleichen der Frequenz des empfangenen Signals mit in dem Logikmodul hinterlegten Daten. Im Schritt 103 erfolgt ein Steuern einer ersten Lichtquelle, wobei in Abhängigkeit von dem Vergleich zwischen der Frequenz des Signals und den in dem Logikmodul hinterlegten Daten eine elektrische Versorgung der ersten Lichtquelle freigegeben wird, sodass die erste Lichtquelle mit der elektrischen Energie beaufschlagt wird und Licht emittiert, oder blockiert wird, sodass die erste Lichtquelle nicht mit der elektrischen Energie beaufschlagt wird und kein Licht emittiert. Im Schritt 104 erfolgt ein Steuern einer zweiten Lichtquelle, wobei in Abhängigkeit von dem Vergleich zwischen der Frequenz des Signals und den in dem Logikmodul hinterlegten Daten eine elektrische Versorgung der zweiten Lichtquelle freigegeben wird, sodass die zweite Lichtquelle mit der elektrischen Energie beaufschlagt wird und Licht emittiert, oder blockiert wird, sodass die zweite Lichtquelle nicht mit der elektrischen Energie beaufschlagt wird und kein Licht emittiert. In Schritt 105 erfolgt ein Steuern gegebenenfalls weiterer Lichtquellen, wobei in Abhängigkeit von dem Vergleich zwischen der Frequenz des Signals und den in dem Logikmodul hinterlegten Daten eine elektrische Versorgung der gegebenenfalls weiteren Lichtquellen freigegeben wird, sodass die gegebenenfalls weiteren Lichtquellen mit der elektrischen Energie beaufschlagt werden und Licht emittieren, oder blockiert wird, sodass die gegebenenfalls weiteren Lichtquellen nicht mit der elektrischen Energie beaufschlagt werden und kein Licht emittieren. In Schritt 106 erfolgt ein Steuern einer Beleuchtungsstärke der Lichtquellen, wobei der elektrischen Energie, insbesondere in Abhängigkeit von einer definierten Soll-Beleuchtungsstärke, ein Tastgrad und/oder eine Impulsdauer zugewiesen wird und der Tastgrad und/oder die Impulsdauer des Signals der elektrischen Energie gesteuert werden, sodass die Energieversorgung der Lichtquellen, bei denen die elektrische Versorgung durch das Logikmodul freigegeben ist, mit der elektrischen Energie mit dem zugewiesenen Tastgrad und/oder der zugewiesenen Impulsdauer erfolgt.

## Patentansprüche

1. Beleuchtungsvorrichtung, insbesondere zur Beleuchtung einer Tierhaltungsvorrichtung, umfassend
- eine Lichtquellenanordnung mit einer ersten Lichtquelle (18a) und einer zweiten Lichtquelle (18b) und gegebenenfalls weiteren Lichtquellen (18c-h), wobei die erste Lichtquelle und die zweite Lichtquelle und die gegebenenfalls weiteren Lichtquellen ausgebildet sind, um Licht, vorzugsweise mit voneinander abweichenden Wellenlängen und/oder voneinander abweichenden Farben, insbesondere rot und weiß, zu emittieren,
- eine Leuchte (10), welche die Lichtquellenanordnung und ein mit der Lichtquellenanordnung signaltechnisch verbundenes Logikmodul (23) umfasst,
wobei das Logikmodul (23) ausgebildet ist, um
∘ über eine Versorgungsleitung (50) ein elektrisches Energieversorgungssignal zu empfangen,
∘ eine Frequenz eines Signals aus dem elektrischen Energieversorgungssignal auszulesen,
∘ die Frequenz des Signals mit in dem Logikmodul (23) hinterlegten Daten zu vergleichen, und
∘ in Abhängigkeit von dem Vergleich zwischen der Frequenz des Signals und den in dem Logikmodul (23) hinterlegten Daten einen in der Frequenz codierten Kanal oder mehrere in der Frequenz codierte Kanäle zu bestimmen,
∘ in Abhängigkeit von dem in der Frequenz codierten Kanal oder den mehreren in der Frequenz codierten Kanälen eine elektrische Versorgung der ersten Lichtquelle (18a) freizugeben, sodass die erste Lichtquelle mit der elektrischen Energie aus dem Energieversorgungssignal beaufschlagt wird und Licht emittiert, oder zu blockieren, sodass die erste Lichtquelle nicht mit der elektrischen Energie aus dem Energieversorgungssignal beaufschlagt wird und kein Licht emittiert, und
∘ in Abhängigkeit von dem in der Frequenz codierten Kanal oder den mehreren in der Frequenz codierten Kanälen eine elektrische Versorgung der zweiten Lichtquelle (18b) freizugeben, sodass die zweite Lichtquelle mit der elektrischen Energie aus dem Energieversorgungssignal beaufschlagt wird und Licht emittiert, oder zu blockieren, sodass die zweite Lichtquelle nicht mit der elektrischen Energie aus dem Energieversorgungssignal beaufschlagt wird und kein Licht emittiert,
wobei die Beleuchtungsvorrichtung eine Steuerungseinrichtung (30) umfasst, die eine Benutzerschnittstelle aufweist zur Bestimmung einer in der Frequenz zu codierenden Farbe und zur Bestimmung einer Soll-Beleuchtungsstärke,
wobei die Steuerungseinrichtung (30) ausgebildet ist, um
∘ auf das Energieversorgungssignal die Frequenz aufzumodulieren, in Abhängigkeit von der in der Frequenz zu codierenden Farbe, und
∘ auf das Energieversorgungssignal einen Tastgrad und/oder eine Impulsdauer (d) aufzumodulieren, in Abhängigkeit von der definierten Soll-Beleuchtungsstärke, und den Tastgrad und/oder die Impulsdauer (d) des Energieversorgungssignals zu steuern, sodass die Energieversorgung der Lichtquellen, bei denen die elektrische Versorgung durch das Logikmodul freigegeben ist, mit der elektrischen Energie mit dem zugewiesenen Tastgrad und/oder der zugewiesenen Impulsdauer (d) aus dem Energieversorgungssignal erfolgt.

2. Beleuchtungsvorrichtung nach dem vorhergehenden Anspruch, wobei die Benutzerschnittstelle ausgebildet ist, um auf das Energieversorgungssignal die Frequenz aufzumodulieren, in Abhängigkeit von dem in der Frequenz zu codierenden Kanal oder den mehreren in der Frequenz zu codierenden Kanälen.

3. Beleuchtungsvorrichtung nach einem der vorhergehenden Ansprüche, wobei das Logikmodul ausgebildet ist, um
∘ die erste und zweite Lichtquelle (18a, 18b) und die gegebenenfalls weiteren Lichtquellen (18c-h) so anzusteuern, dass die erste Lichtquelle mit einem ersten Anteil der elektrischen Energie aus dem Energieversorgungssignal versorgt wird und die zweite Lichtquelle mit einem zweiten, vom ersten Anteil verschiedenen Anteil der elektrischen Energie aus dem Energieversorgungssignal versorgt wird und jede der gegebenenfalls weiteren Lichtquellen mit einem entsprechend weiteren Anteil der elektrischen Energie aus dem Energieversorgungssignal versorgt wird, und
∘ den ersten und den zweiten und die gegebenenfalls weiteren Anteile der elektrischen Energie so zu steuern, dass dadurch eine erste Strahlungsintensität der ersten Lichtquelle und eine hiervon verschiedene zweite Strahlungsintensität der zweiten Lichtquelle und gegebenenfalls Strahlungsintensitäten der weiteren Lichtquellen erzeugt werden, deren Mischung eine Strahlung mit der in der Frequenz codierten Farbe bewirkt.

4. Beleuchtungsvorrichtung nach einem der vorhergehenden Ansprüche, wobei das Logikmodul ausgebildet ist, um
∘ in Abhängigkeit von dem in der Frequenz codierten Kanal oder der mehreren in der Frequenz codierten Kanäle eine elektrische Versorgung der gegebenenfalls weiteren Lichtquellen freizugeben, sodass die gegebenenfalls weiteren Lichtquellen mit der elektrischen Energie oder einem Anteil der elektrischen Energie beaufschlagt werden und Licht emittieren, oder zu blockieren, sodass die gegebenenfalls weiteren Lichtquellen nicht mit der elektrischen Energie beaufschlagt werden und kein Licht emittieren.

5. Beleuchtungsvorrichtung nach einem der vorhergehenden Ansprüche, umfassend
- eine Versorgungsleitung (50) zur Leitung des elektrischen Energieversorgungssignals mit genau zwei elektrischen Leitungen, wobei das Logikmodul, und vorzugsweise die erste Lichtquelle und die zweite Lichtquelle und die gegebenenfalls weiteren Lichtquellen, an der Versorgungsleitung angeordnet und elektrisch mit der Versorgungsleitung verbunden ist
und/oder
- einen Verpolungsschutz (21), insbesondere in Form eines Gleichrichters, der mit dem Logikmodul elektrisch verbunden ist und das elektrische Energieversorgungssignal mit einer vorbestimmten Polung an das Logikmodul weiterleitet.

6. Beleuchtungsvorrichtung nach einem der vorhergehenden Ansprüchen,
**dadurch gekennzeichnet, dass** die Leuchte mehrere Lichtquellenanordnungen umfasst, oder
**gekennzeichnet durch** mehrere Leuchten, die jeweils ein Logikmodul und mindestens eine Lichtquellenanordnung, vorzugsweise mehrere Lichtquellenanordnungen umfassen,
wobei die eine oder mehreren Leuchten vorzugsweise ein zur Durchdringung einer isolierenden Umhüllung einer Versorgungsleitung ausgebildetes Kontaktierungsbauteil umfassen und mittels dieses Kontaktierungsbauteils mit einer Versorgungsleitung, vorzugsweise einer Versorgungsleitung nach dem vorhergehenden Anspruch, elektrisch verbunden sind.

7. Beleuchtungsvorrichtung nach einem der vorhergehenden Ansprüche, wobei das Energieversorgungssignal ein pulsweitenmoduliertes Signal ist und das pulsweitenmodulierte Signal einen Tastgrad und eine Frequenz aufweist,
wobei vorzugsweise die elektrische Spannung des Energieversorgungssignals mit der Frequenz des Signals zwischen einem ersten Spannungswert, vorzugsweise 100 % der elektrischen Spannung, und einem zweiten Spannungswert, vorzugsweise 0 % oder -100 % der elektrischen Spannung, wechselt
und/oder
wobei vorzugsweise der elektrische Strom des Energieversorgungssignals mit der Frequenz des Signals zwischen einem ersten Stromwert, vorzugsweise 100 % des elektrischen Stroms, und einem zweiten Stromwert, vorzugsweise 0 % oder -100 % des elektrischen Stroms, wechselt.

8. Beleuchtungsvorrichtung nach einem der vorhergehenden Ansprüchen, wobei die Steuerungseinrichtung ausgebildet ist, um
∘ in Abhängigkeit von der Soll-Beleuchtungsstärke dem Energieversorgungssignal einen Tastgrad zuzuweisen, sodass die elektrische Versorgung der Lichtquellen mit elektrischer Energie in Form eines Signals mit dem zugewiesenen Tastgrad erfolgt,
und/oder
∘ in Abhängigkeit von der Soll-Beleuchtungsstärke dem Energieversorgungssignal eine Impulsdauer (d) zuzuweisen, sodass die elektrische Versorgung der Lichtquellen mit elektrischer Energie in Form eines Signals mit der zugewiesenen Impulsdauer (d) erfolgt,
und/oder
∘ in Abhängigkeit von einer Soll-Beleuchtungsstärke dem Energieversorgungssignal eine Periodendauer (T) zuzuweisen, sodass die elektrische Versorgung der Lichtquellen mit elektrischer Energie in Form eines Signals mit der zugewiesenen Periodendauer (T) erfolgt,
wobei vorzugsweise in Abhängigkeit von einem Farbwert und/oder einem Zeitwert, insbesondere in Abhängigkeit von der Tageszeit, dem Energieversorgungssignal eine Frequenz zugewiesen wird, sodass die Versorgung der Lichtquellen mit dem Energieversorgungssignal in Abhängigkeit von dem Farbwert und/oder dem Zeitwert, insbesondere der Tageszeit, gesteuert, insbesondere mit Anteilen des Energieversorgungssignals oder vollständig freigegeben wird oder blockiert wird.

9. Beleuchtungsvorrichtung nach einem der vorhergehenden Ansprüche, wobei
die zugewiesenen Frequenzen mindestens 300 Hz, besonders bevorzugt mindestens 400 Hz, insbesondere mindestens 500 Hz betragen
und/oder
die zugewiesenen Frequenzen höchstens 2500 Hz, besonders bevorzugt höchstens 2250 Hz, insbesondere höchstens 2000 Hz betragen.

10. Beleuchtungsvorrichtung nach einem der vorhergehenden Ansprüche, ferner umfassend einen Treiber, wobei die Steuerungseinrichtung (30) mit dem Treiber signaltechnisch verbunden ist und der Treiber mit einer Versorgungsleitung, vorzugsweise einer Versorgungsleitung nach Anspruch 5, verbunden ist, wobei der Treiber die Versorgungsleitung mit dem Energieversorgungssignal beaufschlagt, wobei der Treiber vorzugsweise eine Nennausgangsspannung von nicht mehr als 48 V aufweist.

11. Beleuchtungsvorrichtung nach einem der vorhergehenden Ansprüche,
wobei mindestens eine der Lichtquellen, vorzugsweise alle Lichtquellen, als Leuchtdiode(n) ausgebildet ist/sind und wobei vorzugsweise eine Lichtquellenanordnung mindestens zwei Leuchtdioden mit unterschiedlichen Farben umfasst, wobei die Farben ausgewählt sind aus der folgenden Gruppe: Rot, Grün, Blau, Weiß, Ultraviolett.

12. Beleuchtungsvorrichtung nach einem der vorhergehenden Ansprüche,
wobei die Beleuchtungsvorrichtung und/oder die Versorgungsleitung (50) eine Länge von mindestens 1 m oder mindestens 5 m oder mindestens 10 m oder mindestens 15 m oder mindestens 20 m aufweist.

13. Beleuchtungsvorrichtung nach einem der vorhergehenden Ansprüche,
wobei die Steuerungseinrichtung (30) ausgebildet ist, um die Beaufschlagung der Versorgungsleitung (50) mit elektrischer Energie so zu steuern, dass die Beaufschlagung der Versorgungsleitung mit elektrischer Energie in Form eines pulsweitenmodulierten Signals ein zeitlich veränderliches pulsweitenmoduliertes Signal aufweist und das Signal nach einem sich wiederholenden Schema abläuft, wobei das Schema vorzugsweise eine Dauer von 24 Stunden aufweist.

14. Verfahren zum Steuern einer Beleuchtungsvorrichtung, vorzugsweise einer Beleuchtungsvorrichtung nach einem der vorhergehenden Ansprüche, umfassend
- Beaufschlagen einer Versorgungsleitung (50) zur Energieübertragung und Signalübertragung, die vorzugsweise genau zwei elektrische Leitungen aufweist, mit einem Energieversorgungssignal in Form eines Signals mit einer zugewiesenen Frequenz,
- Auslesen der Frequenz des empfangenen Energieversorgungssignals mit einem in einer Leuchte angeordneten Logikmodul (23), das an der Versorgungsleitung angeordnet und elektrisch mit der Versorgungsleitung verbunden ist,
- Vergleichen der Frequenz des empfangenen Energieversorgungssignals mit in dem Logikmodul (23) hinterlegten Daten,
- Steuern einer in der Leuchte angeordneten ersten Lichtquelle, wobei in Abhängigkeit von dem Vergleich zwischen der Frequenz des Energieversorgungssignals und den in dem Logikmodul (23) hinterlegten Daten eine elektrische Versorgung der ersten Lichtquelle freigegeben wird, sodass die erste Lichtquelle mit der elektrischen Energie beaufschlagt oder blockiert wird, sodass die erste Lichtquelle vollständig, teilweise oder nicht mit dem Energieversorgungssignal beaufschlagt wird und dadurch Licht emittiert oder kein Licht emittiert,
- Steuern einer in der Leuchte angeordneten zweiten Lichtquelle, wobei in Abhängigkeit von dem Vergleich zwischen der Frequenz des Energieversorgungssignals und den in dem Logikmodul (23) hinterlegten Daten eine elektrische Versorgung der zweiten Lichtquelle freigegeben wird, sodass die zweiten Lichtquelle mit der elektrischen Energie beaufschlagt oder blockiert wird, sodass die zweiten Lichtquelle vollständig, teilweise oder nicht mit dem Energieversorgungssignal beaufschlagt wird und dadurch Licht emittiert oder kein Licht emittiert,
- Bestimmen einer in der Frequenz zu codierenden Farbe und einer Soll-Beleuchtungsstärke,
- Aufmodulieren der Frequenz auf das Energieversorgungssignal, in Abhängigkeit von der in der Frequenz zu codierenden Farbe, und
- Aufmodulieren eines Tastgrads auf das Energieversorgungssignal und/oder einer Impulsdauer (d), in Abhängigkeit von der definierten Soll-Beleuchtungsstärke,
**gekennzeichnet durch**
- Steuern des Tastgrads und/oder der Impulsdauer (d) des Energieversorgungssignals, sodass die Energieversorgung der Lichtquellen, bei denen die elektrische Versorgung durch das Logikmodul freigegeben ist, mit der elektrischen Energie mit dem zugewiesenen Tastgrad und/oder der zugewiesenen Impulsdauer (d) aus dem Energieversorgungssignal erfolgt.

15. Verfahren nach Anspruch 14, weiterhin umfassend
- Steuern von zumindest einer weiteren, in der Leuchte angeordneten Lichtquelle, wobei in Abhängigkeit von dem Vergleich zwischen der Frequenz des Energieversorgungssignals und den in dem Logikmodul (23) hinterlegten Daten eine elektrische Versorgung der weiteren Lichtquelle freigegeben wird, sodass die weitere Lichtquelle mit der elektrischen Energie beaufschlagt oder blockiert wird, sodass die weitere Lichtquelle vollständig, teilweise oder nicht mit dem Energieversorgungssignal beaufschlagt wird und dadurch Licht emittiert oder kein Licht emittiert.

16. Verfahren nach einem der Ansprüche 14-15, umfassend
- Steuern einer Beleuchtungsstärke der ersten, zweiten und gegebenenfalls weiteren Lichtquellen, wobei dem Energieversorgungssignal, insbesondere in Abhängigkeit von einer definierten Soll-Beleuchtungsstärke, ein Tastgrad und/oder eine Impulsdauer (d) zugewiesen wird und der Tastgrad und/oder die Impulsdauer des Energieversorgungssignals gesteuert werden, sodass die Energieversorgung der Lichtquellen, bei denen das Energieversorgungssignal durch das Logikmodul vollständig oder reduziert freigegeben ist, mit dem vollen oder reduziertem Energieversorgungssignal mit dem zugewiesenen Tastgrad und/oder der zugewiesenen Impulsdauer erfolgt.

17. Verwendung einer Beleuchtungsvorrichtung nach einem der vorhergehenden Ansprüche 1-13 innerhalb eines Stallgebäudes (80) für Nutztiere, insbesondere innerhalb eines Stallgebäudes zur Haltung von Geflügeltieren wie Legehennen,
vorzugsweise zur Ausleuchtung eines Bodenbereichs (72) unterhalb einer Voliere (70, 70a-d) und/oder einer Etage (71) einer Voliere und/oder einer Futterschale, wobei die Beleuchtungsvorrichtung vorzugsweise entlang der Voliere mit der Voliere verbunden ist.

## Claims

1. A lighting device, in particular for lighting an animal husbandry device, comprising
∘ a light source arrangement with a first light source (18a) and a second light source (18b) and optionally further light sources (18c-h), wherein the first light source and the second light source and the optionally further light sources are designed to emit light, preferably with wavelengths differing from one another and/or colors differing from one another, in particular red and white,
o a luminaire (10) comprising the light source arrangement and a logic module (23) which is signal-connected to the light source arrangement,
wherein the logic module (23) is configured
∘ to receive an electrical power supply signal via a supply line (50),
∘ to read a frequency of a signal from the electrical power supply signal,
∘ compare the frequency of the signal with data stored in the logic module (23), and
∘ in dependence on the comparison between the frequency of the signal and the data stored in the logic module (23) to determine one channel coded in the frequency or several channels coded in the frequency,
∘ in dependence on the channel or channels coded in the frequency to enable electrical power to the first light source (18a) such that the first light source is supplied with the electrical power from the power supply signal and emits light, or to block electrical power to the first light source such that the first light source is not supplied with the electrical power from the power supply signal and does not emit light, and
∘ depending on the channel or channels coded in the frequency, to enable an electrical supply to the second light source (18b), such that the second light source is supplied with the electrical energy electrical energy from the power supply signal and emits light, or to block, such that the second light is not supplied with the electrical power from the power supply signal and does not emit light,
wherein the lighting device comprises a control device (30) comprising a user interface for determining a color to be encoded in a frequency and for determining a target illuminance,
wherein the control device (30) is adapted to
∘ modulate the frequency on the power supply signal as a function of the color to be encoded in the frequency, and
∘ modulate a duty cycle and/or a pulse duration (d) on the power supply signal, in particular depending on the defined target illuminance, and to control the duty cycle and/or the pulse duration (d) of the power supply signal, such that the power supply of the light sources supply of the light sources for which the electrical supply is enabled by the logic module, is provided with the electrical energy with the assigned duty cycle and/or the assigned pulse duration (d) from the power supply signal.

2. Lighting device according to the preceding claim, wherein the user interface is adapted to modulate the frequency on the power supply signal, in dependence of the channel coded in the frequency or of the several channels coded in the frequency.

3. Lighting device according to one of the preceding claims, wherein the logic module is adapted to
∘ control the first and second light sources (18a, 18b) and the optionally further light sources (18c-h) such that the first light source is supplied with a first portion of the electrical energy from the power supply signal and the second light source is supplied with a second portion, different from the first portion, of the electrical energy from the power supply signal and each of the optionally further light sources is supplied with a corresponding further portion of the electrical energy from the power supply signal, and
∘ control the first and the second and, if applicable, the further components of the electrical energy in such a way that a first radiation intensity of the first light source and a second intensity, different from the first intensity, of the second light source and, optionally radiation intensities of the further light sources are generated, whose mixture causes a radiation with the color coded in the frequency.

4. Lighting device according to one of the preceding claims, wherein the logic module is adapted to
∘ in dependence of the channel coded in the frequency or of the several channels coded in the frequency to enable an electrical supply to optional further light sources, so that the optional further light sources are supplied with the electrical energy or a portion of the electrical energy and emit light, or to block said electrical supply such that the optionally further light sources are not supplied with the electrical energy and do not emit any light.

5. Lighting device according to one of the preceding claims, comprising
∘ a supply line (50) for conducting the electrical power supply signal with exactly two electrical lines, whereby the logic module, and preferably the first light source and the second light source and, the optional further light sources, are arranged on the supply line and are electrically connected to the supply line,
and/or
∘ a reverse polarity protection (21), in particular in the form of a rectifier, which is electrically connected to the logic module and passes the electrical power supply signal to the logic module with a predetermined polarity.

6. Lighting device according to one of the preceding claims,
**characterized in that** the luminaire comprises several light source arrangements, or
**characterized by** a plurality of luminaires, each comprising a logic module and at least one light source arrangement, preferably a plurality of light source arrangements,
wherein the one or more luminaires preferably comprise a contacting component designed to penetrate an insulating sheath of a supply line and are electrically connected by means of this contacting component to a supply line, preferably to a supply line according to the preceding claim.

7. Lighting device according to one of the preceding claims,
wherein the power supply signal is a pulse width modulated signal and the pulse width modulated signal has a duty cycle and a frequency,
wherein preferably the electrical voltage of the power supply signal changes with the frequency of the signal between a first voltage value, preferably 100% of the electrical voltage, and a second voltage value, preferably 0% or -100% of the electrical voltage,
and/or
wherein preferably the electric current of the power supply signal changes with the frequency of the signal between a first current value, preferably 100% of the electric current, and a second current value, preferably 0% or -100% of the electric current.

8. Lighting device according to one of the preceding Claims, wherein the control device is adapted
∘ to assign a duty cycle to the power supply signal as a function of the target illuminance, so that the electrical power supply to the light sources takes place in the form of a signal with the assigned duty cycle,
and/or
∘ to assign a pulse duration (d) to the power supply signal as a function of the target illuminance, so that the electrical power supply of the light sources with electrical energy takes place in the form of a signal with the assigned pulse duration (d),
and/or
∘ to assign a period duration (T) to the power supply signal as a function of a target illuminance, so that the electrical supply of the light sources with electrical energy takes place with electrical energy in the form of a signal with the assigned period duration (T),
wherein, preferably a frequency is assigned to the power supply signal as a function of a color value and/or a time value, in particular as a function of the time of day, so that the supply of the light sources with the power supply signal is controlled as a function of the color value and/or the time value, in particular the time of day, wherein said supply in particular takes place with portions of the power supply signal or is completely enabled or blocked.

9. Lighting device according to one of the preceding claims, wherein
the assigned frequencies are at least 300 Hz, particularly preferably at least 400 Hz, in particular at least 500 Hz
and/or
the assigned frequencies are at most 2500 Hz, especially preferably at most 2250 Hz, in particular at most 2000 Hz.

10. Lighting device according to one of the preceding claims, further comprising a driver, wherein
the control device (30) is signal-connected to the driver and the driver is connected to a supply line, preferably a supply line according to claim 5, the driver applying the power supply signal to the supply line, wherein the power supply signal, wherein the driver preferably has a nominal output voltage of not more than 48 V.

11. Lighting device according to any one of the preceding claims
wherein at least one of the light sources, preferably all light sources, is/are designed as light emitting diode(s) and wherein preferably a light source arrangement comprises at least two light emitting diodes with different colors, wherein the colors are selected from the following group: red, green, blue, white, ultraviolet.

12. Lighting device according to one of the preceding claims,
wherein the lighting device and/or the supply line (50) has a length of at least 1 m or at least 5 m or at least 10 m or at least 15 m or at least 20 m.

13. Lighting device according to one of the preceding claims.
wherein the control device (30) is adapted to control the application of electrical energy to the supply line (50) such that the application of electrical energy to the supply line in the form of a pulse-width modulated signal comprises a time-varying pulse-width modulated signal and the signal proceeds according to a repetitive pattern, the pattern preferably having a duration of 24 hours.

14. A method for controlling a lighting device, preferably a lighting device according to one of the preceding claims, comprising
- applying a power supply signal in the form of a signal having an assigned frequency to a supply line (50) for power transmission and signal transmission, which preferably has exactly two electrical lines,
- reading out the frequency of the received power supply signal by means of a logic module arranged in a luminaire, which logic module (23) is arranged on the supply line and is electrically connected to the supply line,
- comparing the frequency of the received power supply signal with data stored in the logic module (23),
- controlling a first light source arranged in the luminaire, wherein, as a function of the comparison between the frequency of the power supply signal and the data stored in the logic module (23), an electrical supply to the first light source is enabled so that the first light source is supplied with the electrical energy or is blocked so that the first light source is completely, partially or not supplied with the power supply signal and thereby emits light or does not emit any light,
- controlling a second light source arranged in the luminaire, wherein, as a function of the comparison between the frequency of the power supply signal and the data stored in the logic module (23), an electrical supply to the second light source is enabled so that the second light source is supplied with the electrical energy or is blocked so that the second light source is completely, partially or not supplied with the power supply signal and thereby emits light or does not emit light,
- determining a color to be encoded in the frequency and a target illuminance,
- modulating the frequency onto the power supply signal, depending on the color to be encoded in the frequency, and
- modulating a duty cycle onto the power supply signal and/or a pulse duration (d), depending on the defined target illuminance,
**characterized in that**
- controlling the duty cycle and/or pulse duration (d) of the power supply signal so that the power supply to the light sources, for which the electrical supply is enabled by the logic module, is provided with the electrical energy with the assigned duty cycle and/or the assigned pulse duration (d) from the power supply signal.

15. Method according to the claim 14, further comprising
- Controlling at least one further light source arranged in the luminaire, whereby in dependence on the comparison between the frequency of the power supply signal and the data stored in the logic module (23), an electrical supply to the further light source is enabled, so that the further light further light source is supplied with the electrical energy, or is blocked, so that the further light source is completely, partially or not at all supplied with the signal and thereby emits light or does not emit any light.

16. Method according to one of the claims 14-15, comprising
- Controlling the illuminance of the first, second, and, if applicable, additional light sources, wherein a duty cycle and/or pulse duration (d) is assigned to the power supply signal, in particular depending on a defined target illuminance, is assigned to the energy supply signal, in particular depending on a defined target illuminance, and the duty cycle and/or pulse duration of the energy supply signal is controlled so that the energy supply to the light sources, for which the energy supply signal is fully or partially enabled by the logic module, is provided with the full or reduced energy supply signal with the assigned duty cycle and/or the assigned pulse duration.

17. Use of an lighting device according to one of the preceding claims 1-13 within a livestock building (80) for farm animals, in particular within a livestock building for keeping poultry such as laying hens,
preferably for illuminating a floor area (72) below an aviary (70, 70a-d) and/or a floor (71) of an aviary and/or a feeding trough, wherein the lighting device is preferably connected to the aviary along the aviary.

## Revendications

1. Dispositif d'éclairage, en particulier pour l'éclairage d'un dispositif d'élevage d'animaux, comprenant
- un agencement de sources de lumière avec une première source de lumière (18a) et une deuxième source de lumière (18b) et des le cas échéant autres sources de lumière (18c-h), dans lequel la première source de lumière et la deuxième source de lumière et les le cas échéant autres sources de lumière sont réalisées pour émettre de la lumière, de préférence avec des longueurs d'onde divergentes les unes des autres et/ou des couleurs divergentes les unes des autres, en particulier le rouge et le blanc,
- une lampe (10), laquelle comprend l'agencement de sources de lumière et un module logique (23) relié en termes de technologie de signalisation à l'agencement de sources de lumière,
dans lequel le module logique (23) est réalisé pour
∘ recevoir un signal d'alimentation en énergie électrique via une ligne d'alimentation (50),
∘ lire une fréquence d'un signal à partir du signal d'alimentation en énergie électrique,
∘ comparer la fréquence du signal avec des données enregistrées dans le module logique (23), et
∘ en fonction de la comparaison entre la fréquence du signal et les données enregistrées dans le module logique (23), déterminer un canal codé en fréquence ou plusieurs canaux codés en fréquence,
∘ en fonction du canal codé en fréquence ou des plusieurs canaux codés en fréquence, libérer une alimentation électrique de la première source de lumière (18a), de sorte que la première source de lumière est soumise à l'énergie électrique provenant du signal d'alimentation en énergie et émet de la lumière, ou la bloquer, de sorte que la première source de lumière n'est pas soumise à l'énergie électrique provenant du signal d'alimentation en énergie et n'émet pas de lumière, et
∘ en fonction du canal codé en fréquence ou des plusieurs canaux codés en fréquence, libérer une alimentation électrique de la deuxième source de lumière (18b), de sorte que la deuxième source de lumière est soumise à l'énergie électrique provenant du signal d'alimentation en énergie et émet de la lumière, ou la bloquer, de sorte que la deuxième source de lumière n'est pas soumise à l'énergie électrique provenant du signal d'alimentation en énergie et n'émet pas de lumière,
dans lequel le dispositif d'éclairage comprend un équipement de commande (30), qui présente une interface utilisateur pour la détermination d'une couleur à coder en fréquence et pour la détermination d'une intensité d'éclairage de consigne,
dans lequel l'équipement de commande (30) est réalisé pour
∘ moduler la fréquence sur le signal d'alimentation en énergie, en fonction de la couleur à coder en fréquence, et
∘ moduler un rapport cyclique et/ou une durée d'impulsion (d) sur le signal d'alimentation en énergie, en fonction de l'intensité d'éclairage de consigne définie, et commander le rapport cyclique et/ou la durée d'impulsion (d) du signal d'alimentation en énergie, de sorte que l'alimentation en énergie des sources de lumière, pour lesquelles l'alimentation électrique est libérée par le module logique, se fait avec l'énergie électrique avec le rapport cyclique attribué et/ou la durée d'impulsion (d) attribuée provenant du signal d'alimentation en énergie.

2. Dispositif d'éclairage selon la revendication précédente, dans lequel l'interface utilisateur est réalisée pour moduler la fréquence sur le signal d'alimentation en énergie, en fonction du canal à coder en fréquence ou des plusieurs canaux à coder en fréquence.

3. Dispositif d'éclairage selon l'une quelconque des revendications précédentes, dans lequel le module logique est réalisé pour
∘ commander la première et deuxième source de lumière (18a, 18b) et les le cas échéant autres sources de lumière (18c-h) de telle sorte que la première source de lumière est alimentée avec une première part de l'énergie électrique provenant du signal d'alimentation en énergie et la deuxième source de lumière est alimentée avec une deuxième part, différente de la première part, de l'énergie électrique provenant du signal d'alimentation en énergie et chacune des le cas échéant autres sources de lumière est alimentée avec une autre part correspondante de l'énergie électrique provenant du signal d'alimentation en énergie, et
∘ commander la première et la deuxième et les le cas échéant autres parts de l'énergie électrique de telle sorte qu'ainsi une première intensité de rayonnement de la première source de lumière et une deuxième intensité de rayonnement différente de celle-ci de la deuxième source de lumière et le cas échéant des intensités de rayonnement des autres sources de lumière sont générées, dont le mélange provoque un rayonnement avec la couleur codée en fréquence.

4. Dispositif d'éclairage selon l'une quelconque des revendications précédentes, dans lequel le module logique est réalisé pour
∘ en fonction du canal codé en fréquence ou des plusieurs canaux codés en fréquence, libérer une alimentation électrique des le cas échéant autres sources de lumière, de sorte que les le cas échéant autres sources de lumière sont soumises à l'énergie électrique ou à une part de l'énergie électrique et émettent de la lumière, ou la bloquer, de sorte que les le cas échéant autres sources de lumière ne sont pas soumises à l'énergie électrique et n'émettent pas de lumière.

5. Dispositif d'éclairage selon l'une quelconque des revendications précédentes, comprenant
- une ligne d'alimentation (50) pour la conduite du signal d'alimentation en énergie électrique avec exactement deux lignes électriques, dans lequel le module logique, et de préférence la première source de lumière et la deuxième source de lumière et les le cas échéant autres sources de lumière, est agencé au niveau de la ligne d'alimentation et relié électriquement à la ligne d'alimentation
et/ou
- une protection contre l'inversion de polarité (21), en particulier sous la forme d'un redresseur, qui est reliée électriquement au module logique et transmet le signal d'alimentation en énergie électrique avec une polarité prédéterminée au module logique.

6. Dispositif d'éclairage selon l'une quelconque des revendications précédentes,
**caractérisé en ce que** la lampe comprend plusieurs agencements de sources de lumière, ou **caractérisé par** plusieurs lampes, qui comprennent respectivement un module logique et au moins un agencement de sources de lumière, de préférence plusieurs agencements de sources de lumière,
dans lequel les une ou plusieurs lampes comprennent de préférence un composant de mise en contact réalisé pour la pénétration dans une gaine isolante d'une ligne d'alimentation et sont reliées électriquement au moyen de ce composant de mise en contact à une ligne d'alimentation, de préférence à une ligne d'alimentation selon la revendication précédente.

7. Dispositif d'éclairage selon l'une quelconque des revendications précédentes, dans lequel le signal d'alimentation en énergie est un signal modulé en largeur d'impulsion et le signal modulé en largeur d'impulsion présente un rapport cyclique et une fréquence,
dans lequel de préférence la tension électrique du signal d'alimentation en énergie change avec la fréquence du signal entre une première valeur de tension, de préférence 100 % de la tension électrique, et une deuxième valeur de tension, de préférence 0 % ou -100 % de la tension électrique
et/ou
dans lequel de préférence le courant électrique du signal d'alimentation en énergie change avec la fréquence du signal entre une première valeur de courant, de préférence 100 % du courant électrique, et une deuxième valeur de courant, de préférence 0 % ou -100 % du courant électrique.

8. Dispositif d'éclairage selon l'une quelconque des revendications précédentes, dans lequel l'équipement de commande est réalisé pour
∘ en fonction de l'intensité d'éclairage de consigne, attribuer un rapport cyclique au signal d'alimentation en énergie, de sorte que l'alimentation électrique des sources de lumière se fait avec de l'énergie électrique sous la forme d'un signal avec le rapport cyclique attribué,
et/ou
∘ en fonction de l'intensité d'éclairage de consigne, attribuer une durée d'impulsion (d) au signal d'alimentation en énergie, de sorte que l'alimentation électrique des sources de lumière se fait avec de l'énergie électrique sous la forme d'un signal avec la durée d'impulsion (d) attribuée,
et/ou
∘ en fonction d'une intensité d'éclairage de consigne, attribuer une durée de période (T) au signal d'alimentation en énergie, de sorte que l'alimentation électrique des sources de lumière se fait avec de l'énergie électrique sous la forme d'un signal avec la durée de période (T) attribuée,
dans lequel de préférence en fonction d'une valeur de couleur et/ou d'une valeur de temps, en particulier en fonction de l'heure de la journée, une fréquence est attribuée au signal d'alimentation en énergie, de sorte que l'alimentation des sources de lumière avec le signal d'alimentation en énergie est libérée de manière commandée en fonction de la valeur de couleur et/ou de la valeur de temps, en particulier de l'heure de la journée, en particulier avec des parts du signal d'alimentation en énergie ou complètement ou est bloquée.

9. Dispositif d'éclairage selon l'une quelconque des revendications précédentes, dans lequel
les fréquences attribuées sont d'au moins 300 Hz, de manière particulièrement préférée d'au moins 400 Hz, en particulier d'au moins 500 Hz,
et/ou
les fréquences attribuées sont de maximum 2500 Hz, de manière particulièrement préférée de maximum 2250 Hz, en particulier de maximum 2000 Hz.

10. Dispositif d'éclairage selon l'une quelconque des revendications précédentes, comprenant en outre un pilote, dans lequel l'équipement de commande (30) est relié en termes de technologie de signalisation au pilote et le pilote est relié à une ligne d'alimentation, de préférence à une ligne d'alimentation selon la revendication 5, dans lequel le pilote soumet la ligne d'alimentation au signal d'alimentation en énergie, dans lequel le pilote présente de préférence une tension de sortie nominale de pas plus de 48 V.

11. Dispositif d'éclairage selon l'une quelconque des revendications précédentes,
dans lequel au moins une des sources de lumière, de préférence toutes les sources de lumière, est/sont réalisée/s sous forme de diode(s) électroluminescente(s) et dans lequel de préférence un agencement de sources de lumière comprend au moins deux diodes électroluminescentes avec différentes couleurs, dans lequel les couleurs sont choisies dans le groupe suivant : rouge, vert, bleu, blanc et ultraviolet.

12. Dispositif d'éclairage selon l'une quelconque des revendications précédentes,
dans lequel le dispositif d'éclairage et/ou la ligne d'alimentation (50) présente une longueur d'au moins 1 m ou d'au moins 5 m ou d'au moins 10 m ou d'au moins 15 m ou d'au moins 20 m.

13. Dispositif d'éclairage selon l'une quelconque des revendications précédentes,
dans lequel l'équipement de commande (30) est réalisé pour commander la soumission de la ligne d'alimentation (50) à de l'énergie électrique de telle sorte que la soumission de la ligne d'alimentation à de l'énergie électrique sous la forme d'un signal modulé en largeur d'impulsion présente un signal modulé en largeur d'impulsion variable dans le temps et le signal se déroule selon un schéma répétitif, dans lequel le schéma présente de préférence une durée de 24 heures.

14. Procédé de commande d'un dispositif d'éclairage, de préférence d'un dispositif d'éclairage selon l'une quelconque des revendications précédentes, comprenant
- la soumission d'une ligne d'alimentation (50) pour la transmission d'énergie et la transmission de signal, qui présente de préférence exactement deux lignes électriques, à un signal d'alimentation en énergie sous la forme d'un signal avec une fréquence attribuée,
- la lecture de la fréquence du signal d'alimentation en énergie reçu avec un module logique (23) agencé dans une lampe, qui est agencé au niveau de la ligne d'alimentation et relié électriquement à la ligne d'alimentation,
- la comparaison de la fréquence du signal d'alimentation en énergie reçu avec des données enregistrées dans le module logique (23),
- la commande d'une première source de lumière agencée dans la lampe, dans lequel en fonction de la comparaison entre la fréquence du signal d'alimentation en énergie et les données enregistrées dans le module logique (23), une alimentation électrique de la première source de lumière est libérée, de sorte que la première source de lumière est soumise à l'énergie électrique ou bloquée, de sorte que la première source de lumière est soumise complètement, en partie ou pas du tout au signal d'alimentation en énergie et ainsi émet de la lumière ou n'émet pas de lumière,
- la commande d'une deuxième source de lumière agencée dans la lampe, dans lequel en fonction de la comparaison entre la fréquence du signal d'alimentation en énergie et les données enregistrées dans le module logique (23), une alimentation électrique de la deuxième source de lumière est libérée, de sorte que la deuxième source de lumière est soumise à l'énergie électrique ou bloquée, de sorte que la deuxième source de lumière est soumise complètement, en partie ou pas du tout au signal d'alimentation en énergie et ainsi émet de la lumière ou n'émet pas de lumière,
- la détermination d'une couleur à coder en fréquence et d'une intensité d'éclairage de consigne,
- la modulation de la fréquence sur le signal d'alimentation en énergie, en fonction de la couleur à coder en fréquence, et
- la modulation d'un rapport cyclique sur le signal d'alimentation en énergie et/ou d'une durée d'impulsion (d), en fonction de l'intensité d'éclairage de consigne définie,
**caractérisé par**
- la commande du rapport cyclique et/ou de la durée d'impulsion (d) du signal d'alimentation en énergie, de sorte que l'alimentation en énergie des sources de lumière, pour lesquelles l'alimentation électrique est libérée par le module logique, se fait avec l'énergie électrique avec le rapport cyclique attribué et/ou la durée d'impulsion (d) attribuée provenant du signal d'alimentation en énergie.

15. Procédé selon la revendication 14, comprenant en outre
- la commande d'au moins une autre source de lumière, agencée dans la lampe, dans lequel en fonction de la comparaison entre la fréquence du signal d'alimentation en énergie et les données enregistrées dans le module logique (23), une alimentation électrique de l'autre source de lumière est libérée, de sorte que l'autre source de lumière est soumise à l'énergie électrique ou bloquée, de sorte que l'autre source de lumière est soumise complètement, en partie ou pas du tout au signal d'alimentation en énergie et ainsi émet de la lumière ou n'émet pas de lumière.

16. Procédé selon l'une quelconque des revendications 14-15, comprenant
- la commande d'une intensité d'éclairage des première, deuxième et le cas échéant autres sources de lumière, dans lequel un rapport cyclique et/ou une durée d'impulsion (d) est attribué/e au signal d'alimentation en énergie, en particulier en fonction d'une intensité d'éclairage de consigne définie, et le rapport cyclique et/ou la durée d'impulsion du signal d'alimentation en énergie sont commandés, de sorte que l'alimentation en énergie des sources de lumière, pour lesquelles le signal d'alimentation en énergie est libéré complètement ou de manière réduite par le module logique, se fait avec le signal d'alimentation en énergie complet ou réduit avec le rapport cyclique attribué et/ou la durée d'impulsion attribuée.

17. Utilisation d'un dispositif d'éclairage selon l'une quelconque des revendications précédentes 1-13 à l'intérieur d'un bâtiment d'élevage (80) pour animaux d'élevage, en particulier à l'intérieur d'un bâtiment d'élevage pour l'élevage de volailles telles des poules pondeuses, de préférence pour l'éclairage d'une zone de plancher (72) en dessous d'une volière (70, 70ad) et/ou d'un étage (71) d'une volière et/ou d'une mangeoire, dans lequel le dispositif d'éclairage est relié à la volière de préférence le long de la volière.
